# FASCICULE DE BREVET EUROPEEN

(11) **EP 4 077 950 B1**
(45) Date de publication et mention de la délivrance du brevet: **08.11.2023**
(21) Numéro de dépôt: 20848714.0
(22) Date de dépôt: 17.12.2020
(51) Int. Cl.: F15B 13/01, F16K 15/18, F16K 15/04, F16K 31/06

(54) **BLOC DE SECURITE POUR VERIN ET CIRCUIT HYDRAULIQUE CONTENANT PLUSIEURS VERINS EQUIPES DE TELS BLOCS**
SICHERHEITSBLOCK FÜR ZYLINDER UND HYDRAULISCHE SCHALTUNG UMFASSEND MEHRERE MIT SOLCHEN BLÖCKEN AUSGERÜSTETEN ZYLINDER
SAFETY BLOCK FOR CYLINDER AND HYDRAULIC CIRCUIT COMPRISING MULTIPLE CYLINDERS PROVIDED WITH SAID BLOCKS

(30) Priorité: 17.12.2019 FR 1914566; 30.07.2020 FR 2008102
(43) Date de publication de la demande: 26.10.2022
(73) Titulaire: Lohr Industrie, 67980 Hangenbieten (FR)
(72) Inventeur: ANDRE, Jean-Luc, 67120 MOLSHEIM (FR)
(74) Mandataire: Merckling, Norbert
(86) Numéro de dépôt international: PCT/FR2020/052516
(87) Numéro de publication internationale: WO 2021/123653

(56) Documents cités:
- EP-A1- 3 436 706
- EP-B1- 3 436 706
- WO-A1-2015/112349
- AT-B- 397 135
- DE-A1- 19 925 204
- FR-A1- 2 518 695
- GB-A- 634 293
- US-A1- 2012 152 629

## Description

### Domaine technique

La présente invention se rapporte au domaine technique des vérins dits « de sécurité ». Elle concerne plus particulièrement un dispositif de sécurité pour le maintien en position de la tige d'un vérin hydraulique simple ou double-effet.

L'invention se rapporte également à un circuit hydraulique contenant un ensemble de vérins équipés de tels dispositifs de sécurité et permettant leur alimentation et leur commande de manière particulièrement avantageuse.

Cette invention peut avantageusement s'appliquer aux véhicules portes-voitures ou à d'autres équipements supportant des charges au moyen de vérins hydrauliques simple ou double-effet. Plus généralement, elle peut s'appliquer à tout dispositif comportant plusieurs vérins hydrauliques que l'on souhaite alimenter en fluide hydraulique de manière centralisée, tout en les pilotant indépendamment les uns des autres, de façon sécurisée.

### Technique antérieure

Les vérins hydrauliques simple ou double-effet sont très utilisés pour soulever des charges et les maintenir en l'air. On les emploie fréquemment dans les domaines des transports, de l'industrie, du bâtiment et dans tous les domaines où il est nécessaire de réaliser des mouvements d'élévation, d'abaissement et/ou de maintien d'une charge impliquant des efforts importants. C'est par exemple le cas dans les véhicules portes-voitures qui comportent classiquement plusieurs plateaux mobiles destinés à recevoir les voitures à transporter, et dont la position et la hauteur sont réglables au moyen de différents actionneurs dont des vérins hydrauliques le plus souvent double-effet.

Pour des raisons de sécurité, il est absolument indispensable de garantir le maintien en position de la tige du vérin lorsque son déplacement n'est pas commandé, et ceci même, et surtout, lorsqu'elle supporte une charge. En effet, pour garantir la sécurité des opérateurs et des biens pouvant se trouver en-dessous, la hauteur de la charge ne doit pas varier au fil du temps sans action volontaire de la part de l'opérateur. Pour cela, en l'absence de commande, la tige d'un vérin hydraulique doit être immobilisée en rentrée, comme en sortie, qu'elle supporte une charge ou non.

Pour pallier un éventuel risque de défaillance, on a développé dans l'art antérieur des dispositifs de sécurité associés à ces vérins de levage, constitués d'un bloc hydraulique d'isolement dont des exemples ont été décrits dans les brevets EP 0935715 ou EP 3436706.

Ce dispositif de sécurité connu est un bloc d'isolement, à travers lequel est alimentée l'une des chambres du vérin, qui comprend deux dispositifs d'obturation de même type : un clapet anti-retour primaire à bille, doublé par un clapet anti-retour secondaire dit « de sécurité » à bille ou à pointeau conique, qui sont tous deux des clapets anti-retour mécaniques à obturateur. Ces deux clapets anti-retour successifs sont disposés en série, chacun à l'une des entrées d'un sas.

Lorsque l'opérateur souhaite provoquer l'ouverture du dispositif pour causer la sortie de la tige du vérin par exemple, il commande un distributeur hydraulique afin d'envoyer de l'huile dans le bloc d'isolement. L'arrivée de l'huile provoque l'ouverture du clapet anti-retour secondaire en poussant sur son pointeau conique ou sa bille qui se déplace dans le sas. Par ce mouvement, une tige, indépendante ou liée au pointeau, vient pousser la bille du clapet anti-retour primaire qui s'ouvre à son tour de manière différée.

Ces dispositifs connus ont plusieurs avantages. Ils sont d'abord plus sécuritaires du fait de l'utilisation de deux clapets anti-retour successifs disposés en série. En outre, ils permettent un verrouillage automatique sans l'intervention de l'opérateur et dans n'importe quelle position de la tige du vérin.

Cependant, ces dispositifs connus présentent encore des inconvénients.

Avec de tels dispositifs, l'ouverture du clapet anti-retour primaire et l'ouverture du clapet anti-retour secondaire sont forcément liées. Même si elles sont légèrement différées dans le temps, il est impossible de commander séparément l'ouverture du clapet anti-retour primaire et l'ouverture du clapet anti-retour secondaire, indépendamment l'une de l'autre.

En outre, il est impossible de mettre le dispositif en pression sans provoquer un mouvement de la tige du vérin (en rentrée ou en sortie selon le côté d'alimentation), car l'arrivée de l'huile à l'une des entrées du dispositif provoque automatiquement l'ouverture successive des deux clapets anti-retour concernés.

De plus, lorsque l'installation comporte plusieurs vérins équipés de tels dispositifs de sécurité, il est nécessaire d'installer un distributeur hydraulique séparé pour chacun des dispositifs de sécurité si l'on souhaite pouvoir commander les mouvements des vérins indépendamment les uns des autres.

Lorsque les vérins fonctionnent par paire, comme c'est par exemple le cas dans l'application préférentielle d'un véhicule porte-voitures, il faut en plus ajouter dans le circuit hydraulique des composants assurant le synchronisme des mouvements des deux vérins, pour chacune des paires de vérins.

Lorsque l'installation comprend beaucoup de vérins (une trentaine par exemple sur un véhicule porte-voiture classique formé d'un tracteur et d'une remorque à deux étages), le circuit hydraulique devient compliqué et comporte de nombreux composants hydrauliques (distributeurs et diviseurs de débit) qui doivent être prévus pour chaque vérin ou paire de vérins.

En outre, les distributeurs hydrauliques utilisés, qui sont traditionnellement à commande manuelle, doivent être placés dans un endroit accessible par l'opérateur. Ils sont généralement regroupés dans un bloc de distribution qui est très encombrant et qui est par exemple placé entre les essieux du véhicule.

De très nombreux tuyaux arrivent et partent de ce bloc de distribution, pour réaliser les liaisons d'arrivée et de sortie reliant chaque distributeur au bloc de sécurité qui lui est associé. Ceci conduit à une multiplication des conduites hydrauliques et à des cheminements de tuyauteries compliqués par l'exiguïté des espaces disponibles dans les véhicules.

Par ailleurs, ce bloc de distribution est défini et réalisé lors de la conception de l'installation, sous une forme qui est le plus souvent figée à la fabrication. Il est donc très difficile de modifier le circuit par la suite et par exemple d'ajouter un ou plusieurs vérins supplémentaires pour réaliser de nouvelles fonctions. Si des évolutions sont souhaitées, il faut généralement changer complètement le bloc de distribution ou rajouter un ou plusieurs tiroirs à celui-ci s'il a été prévu modulaire et ceci dans la limite de l'espace encore disponible à ce niveau. Dans tous les cas, il faut encore rajouter tout un ensemble de tuyaux à partir de ce bloc de distribution pour desservir le ou les nouveau(x) vérin(s), ce qui rend très difficile toute évolution du système, postérieure à la fabrication initiale.

Enfin, les distributeurs hydrauliques du bloc de distribution étant à commande manuelle, il n'est pas possible d'automatiser les actions et l'installation de commandes à distance est compliquée.

On connait également la demande de brevet GB 634 293 A qui décrit un circuit comprenant un clapet anti-retour mécanique et un dispositif électrohydraulique à deux obturateurs dont la fermeture et l'ouverture dans les deux sens sont commandées électriquement.

Cependant, le clapet anti-retour et le dispositif électrohydraulique ne sont pas disposés en série, mais en parallèle. De ce fait, lorsque tous les dispositifs d'obturation sont fermés, les chambres du vérin ne sont verrouillées que par un seul dispositif d'obturation. Rien n'est prévu si l'un de ces dispositif d'obturation est défaillant et se met à fuir. La sécurité n'est donc pas optimale et ce système ne répond pas au problème technique.

Pour toutes ces raisons, ces dispositifs antérieurs doivent être améliorés.

### Présentation de l'invention

Le but de l'invention est de proposer un bloc de sécurité alternatif, qui ne présente pas les inconvénients de ces systèmes antérieurs, tout en conservant leurs avantages.

Pour cela, l'invention enseigne un bloc de sécurité à double obturation en série, destiné à un vérin hydraulique de levage capable de soulever, d'abaisser et de maintenir en l'air une charge, qui garantit, par le verrouillage du débit hydraulique, le maintien en position de la tige du vérin hydraulique.

Le bloc de sécurité selon l'invention est prévu pour être monté dans le circuit qui alimente le vérin en fluide hydraulique.

Le bloc de sécurité comprend :
- deux entrées destinées à être connectées au circuit hydraulique et au moins une sortie destinée à être connectée à l'orifice d'une chambre du vérin ;
- un passage hydraulique entre une première de ces deux entrées et l'au moins une sortie, prévu pour que ladite chambre du vérin ne puisse être remplie et vidée qu'à travers ce passage hydraulique, et
- deux dispositifs d'obturation placés en série dans le passage hydraulique de façon que la dite chambre du vérin puisse être verrouillée de manière étanche par deux dispositifs d'obturation successifs.

Ces deux dispositifs d'obturation sont de nature différente. Le premier de ces dispositifs d'obturation est un clapet anti-retour mécanique à obturateur, qui est prévu passant sous la poussée directe du fluide hydraulique pénétrant dans le passage hydraulique par la première de ces deux entrées pour permettre le remplissage de ladite chambre du vérin et qui est également passant sous la poussée, directe ou via l'action d'une pièce de commande, du fluide hydraulique pénétrant par la deuxième de ces deux entrées pour permettre le vidage de ladite chambre du vérin.

Le deuxième de ces dispositifs d'obturation est un préactionneur hydraulique dont l'ouverture et la fermeture sont indépendantes de la présence ou de l'absence du fluide hydraulique au niveau des deux entrées et dans le passage hydraulique.

Un préactionneur hydraulique au sens de l'invention est un organe dont la fonction est de distribuer le fluide hydraulique sous pression vers ou hors de la chambre concernée du vérin sur lequel est monté le bloc de sécurité. Il peut être ouvert ou fermé selon que le fluide hydraulique sous pression peut le traverser ou non, pour rejoindre ou s'échapper de la chambre concernée du vérin.

Ce préactionneur peut être de nature quelconque du moment que son ouverture et sa fermeture ne dépendent pas de la présence ou de l'absence de fluide hydraulique dans la conduite hydraulique. Il peut ainsi s'agir par exemple d'une vanne à commande électrique (électrovanne), pneumatique ou hydraulique, ou d'un clapet anti-retour piloté.

Avec un tel bloc de sécurité, il est possible de commander séparément l'ouverture et la fermeture des deux dispositifs d'obturation, indépendamment l'un de l'autre, car elles sont provoquées par deux phénomènes différents (pression du fluide hydraulique présent dans la conduite pour le premier dispositif d'obturation et commande du préactionneur, par exemple de nature électrique, pour le deuxième dispositif d'obturation).

En outre, le préactionneur hydraulique du deuxième dispositif d'obturation peut rester fermé même en présence de fluide hydraulique sous pression. Il est donc possible de mettre le dispositif en pression tout en garantissant l'immobilité de la tige du vérin.

Selon un mode de réalisation de l'invention, le premier de ces dispositifs d'obturation est un clapet anti-retour à bille ou à pointeau conique.

Selon un mode de réalisation de l'invention, le bloc de sécurité comporte une pièce de commande située à proximité du clapet anti-retour mécanique, cette pièce de commande se déplaçant en direction du clapet anti-retour mécanique sous la poussée du fluide hydraulique pénétrant par la deuxième de ces deux entrées et venant pousser l'obturateur pour provoquer l'ouverture du clapet anti-retour mécanique.

Selon un mode de réalisation de l'invention, le préactionneur hydraulique est, ou est commandé par, une électrovanne, qui est préférentiellement une électrovanne à clapet.

Avantageusement l'ordre des dispositif d'obturation peut être inversé. Selon les variantes, le premier ou le deuxième de ces dispositifs d'obturation peut être destiné à être placé du côté le plus proche du vérin.

Selon un mode de réalisation de l'invention, les deux dispositifs d'obturation sont disposés directement à la suite l'un de l'autre.

Selon un mode de réalisation de l'invention, le bloc de sécurité peut être destiné à un vérin hydraulique double-effet comprenant deux chambres. Le bloc de sécurité comporte alors :
- au moins deux entrées destinées à être connectées au circuit hydraulique ;
- deux sorties destinées à être connectées pour la première à l'orifice de la première des deux chambres du vérin et pour la deuxième à l'orifice de la deuxième des deux chambres du vérin ;
- deux passages hydrauliques, situés pour le premier entre la première de ces au moins deux entrées et la première de ces deux sorties et pour le deuxième entre la deuxième de ces au moins deux entrées et la deuxième des deux sorties, prévus pour que chacune des deux chambres du vérin ne puisse être remplie et vidée qu'à travers l'un de ces deux passages hydrauliques, et
- deux dispositifs d'obturation, de nature différente, placés en série dans chacun de ces deux passages hydrauliques de façon que chacune des deux chambres du vérin puisse être verrouillée de manière étanche par deux dispositifs d'obturation successifs. Le premier dispositif d'obturation est un clapet anti-retour mécanique à obturateur qui est passant sous la poussée directe du fluide hydraulique pénétrant dans le passage hydraulique concerné par l'entrée correspondante pour permettre le remplissage de la chambre concernée du vérin, et qui est également passant sous la poussée, directe ou via l'action d'une pièce de commande, du fluide hydraulique pénétrant par une autre de ces au moins deux entrées pour permettre le vidage de ladite chambre concernée du vérin. Le deuxième dispositif d'obturation est un préactionneur hydraulique dont l'ouverture et la fermeture sont indépendantes de la présence ou de l'absence de fluide hydraulique au niveau de ces au moins deux entrées et dans le passage hydraulique concerné.

Selon une variante de ce mode de réalisation de l'invention, dans chaque passage hydraulique, pour permettre le vidage de la chambre concernée du vérin, le clapet anti-retour mécanique à obturateur est prévu passant sous la poussée du fluide hydraulique pénétrant par l'entrée de l'autre passage hydraulique (c'est-à-dire celui alimentant l'autre chambre du vérin) ou par une autre entrée dédiée à cette fonction (et qui n'est donc connectée à aucune des chambres du vérin).

Selon une variante de ce mode de réalisation de l'invention, le bloc de sécurité peut comporter un corps unique dans lequel sont logés les deux passages hydrauliques. Cependant, une variante dans laquelle les deux passages hydrauliques sont logés dans deux corps différents est également possible.

Selon une variante de ce mode de réalisation de l'invention, le bloc de sécurité comporte une pièce de commande spécifique pour le clapet anti-retour mécanique de chacun des deux passages hydrauliques. Selon cette variante, le bloc de sécurité comporte donc deux pièces de commande séparées.

Selon une autre variante de ce mode de réalisation de l'invention, le bloc de sécurité peut comporter une pièce de commande unique commune aux clapets anti-retour mécaniques des deux passages hydrauliques et susceptible de provoquer alternativement l'ouverture du clapet anti-retour mécanique de chacun des deux passages hydrauliques.

La construction du dispositif s'en trouve avantageusement simplifiée. Le poids de l'ensemble et son coût de fabrication sont réduits. En outre, le nombre de pièces, notamment de joints d'étanchéité, à entretenir est diminué.

Selon cette variante, la pièce de commande unique peut être une navette centrale coulissante disposée entre les deux passages hydrauliques, qui comporte deux doigts latéraux saillants s'étendant chacun en direction de l'un des passages hydrauliques. Cette pièce de commande unique est susceptible de se déplacer alternativement en direction de chacun de ces passages hydrauliques, et, lorsqu'elle arrive à proximité de l'un d'eux, elle provoque l'ouverture de son clapet anti-retour mécanique au moyen de son doigts latéral saillant correspondant qui vient pousser l'obturateur de ce clapet anti-retour mécanique, les deux doigts latéraux saillants étant prévus suffisamment courts pour qu'ils ne puissent pas être en contact simultanément avec les deux obturateurs des deux clapets anti-retour mécaniques en position fermée, des deux passages hydrauliques.

Selon une autre variante de ce mode de réalisation de l'invention, les deuxièmes dispositifs d'obturation des deux passages hydrauliques peuvent comprendre un préactionneur hydraulique commun aux deux passages hydrauliques, par exemple sous la forme d'une vanne à quatre orifices.

L'invention enseigne également un vérin hydraulique, simple ou double-effet, équipé d'un bloc de sécurité selon l'invention.

L'invention enseigne enfin un circuit hydraulique comprenant plusieurs vérins hydrauliques, plusieurs blocs de sécurité selon l'invention, chaque vérin étant équipé d'un bloc de sécurité selon l'invention et comprenant une tige et une ou deux chambres alimentées chacune à travers un passage hydraulique dudit bloc de sécurité, un réservoir de fluide hydraulique, un bloc de distribution, un ensemble de tuyaux reliant le réservoir aux vérins, via le bloc de distribution, afin de remplir et/ou de vider chacune des chambres des vérins, et un dispositif de pompage permettant de faire circuler le fluide hydraulique dans les tuyaux.

Selon l'invention, le bloc de distribution comprend un unique distributeur hydraulique à trois positions, la première interrompant la circulation du fluide hydraulique, la deuxième mettant en communication le dispositif de pompage et le réservoir avec tous les blocs de sécurité de tous les vérins simultanément d'une façon capable de provoquer la sortie de la tige de tous les vérins, et la troisième mettant en communication le dispositif de pompage et le réservoir avec tous les blocs de sécurité de tous les vérins simultanément d'une façon capable de provoquer la rentrée de la tige de tous les vérins.

En outre, les préactionneurs hydrauliques de chacun des blocs de sécurité sont commandés de manière à pouvoir être ouverts ou fermés indépendamment des préactionneurs hydrauliques des autres blocs de sécurité.

Selon un mode de réalisation de ce circuit hydraulique, les préactionneurs hydrauliques sont commandés à distance.

Selon un mode de réalisation particulier, dans lequel les vérins sont organisés en plusieurs paires de deux vérins fonctionnant de manière synchronisée, le circuit hydraulique ne comporte avantageusement qu'un unique composant diviseur de débit, qui assure le synchronisme des mouvements de toutes les paires de vérins.

Selon un mode de réalisation de ce circuit hydraulique, il n'y a que deux tuyaux en sortie du bloc de distribution allant en direction des blocs de sécurité, l'un dans lequel circule le fluide hydraulique permettant de provoquer la sortie de la tige de tous les vérins et l'autre dans lequel circule le fluide hydraulique permettant de provoquer la rentrée de la tige de tous les vérins.

Le bloc de sécurité selon l'invention permet de réaliser des circuits hydrauliques dans lesquels les composants et les conduites sont moins nombreux que dans l'art antérieur, pour un résultat équivalent.

De tels circuits sont moins coûteux, plus faciles à installer et à entretenir, et sont aisément modifiables pour les faire évoluer.

En outre, lorsqu'il s'agit d'électrovannes, le pilotage des préactionneurs hydrauliques est facilement automatisable et réalisable à distance.

### Brève description des figures

D'autres caractéristiques et avantages de l'invention apparaîtront à la lecture de la description détaillée qui va suivre, description faite en référence aux dessins annexés, dans lesquels :
- la figure 1 est une vue générale en perspective d'un exemple de vérin double-effet de sécurité selon l'invention ;
- la figure 2 est une vue en coupe longitudinale d'un exemple de bloc de sécurité pour vérin double-effet, en position verrouillée de sécurité ;
- les figures 3 à 8 sont des vues en coupe longitudinales, à chaque fois d'un vérin double-effet équipé du bloc de sécurité de la figure 2 et d'un agrandissement du bloc de sécurité seul, qui illustrent schématiquement le fonctionnement du dispositif :
   . lors de la sortie de la tige du vérin pour les figures 3 et 4,
   . lors de la rentrée de la tige du vérin pour les figures 5 et 6, et
   . lorsqu'un autre vérin du circuit est commandé pour les figures 7 et 8 ;
- les figures 9 et 10 sont des vues schématiques d'un exemple de circuit hydraulique comprenant trois vérins double-effet équipés chacun d'un bloc de sécurité respectivement selon l'invention pour la figure 9 et selon l'art antérieur pour la figure 10 ;
- les figures 11 et 12 sont des vues schématiques d'un exemple de circuit hydraulique comprenant six vérins double-effet fonctionnant par paires, équipés chacun d'un bloc de sécurité respectivement selon l'invention pour la figure 11 et selon l'art antérieur pour la figure 12 ;
- la figure 13 est une vue schématique d'un deuxième exemple de bloc de sécurité selon l'invention équipant un vérin double-effet ;
- la figure 14 est une vue schématique d'un troisième exemple de bloc de sécurité selon l'invention équipant un vérin double-effet ;
- les figures 15 et 16 sont des vues générales en perspective et en coupe longitudinale d'un vérin simple-effet équipé d'un quatrième exemple de bloc de sécurité selon l'invention ;
- les figures 17 à 20 sont des vues en coupe longitudinale d'un agrandissement du bloc de sécurité de la figure 16 représenté seul, qui illustrent schématiquement le fonctionnement du dispositif, respectivement :
   . en position verrouillée de sécurité pour la figure 17 ;
   . lors de la sortie de la tige du vérin pour la figure 18 ;
   . lors de la rentrée de la tige du vérin pour la figure 19 ;
   . lorsqu'un autre vérin du circuit est commandé pour la figure 20 ;
- la figure 21 est une vue schématique en coupe d'un cinquième exemple de bloc de sécurité selon l'invention prévu pour un vérin simple-effet.
- la figure 22 est une vue schématique en coupe d'un vérin double-effet équipé d'un sixième exemple de bloc de sécurité selon l'invention.

### Description détaillée de l'invention

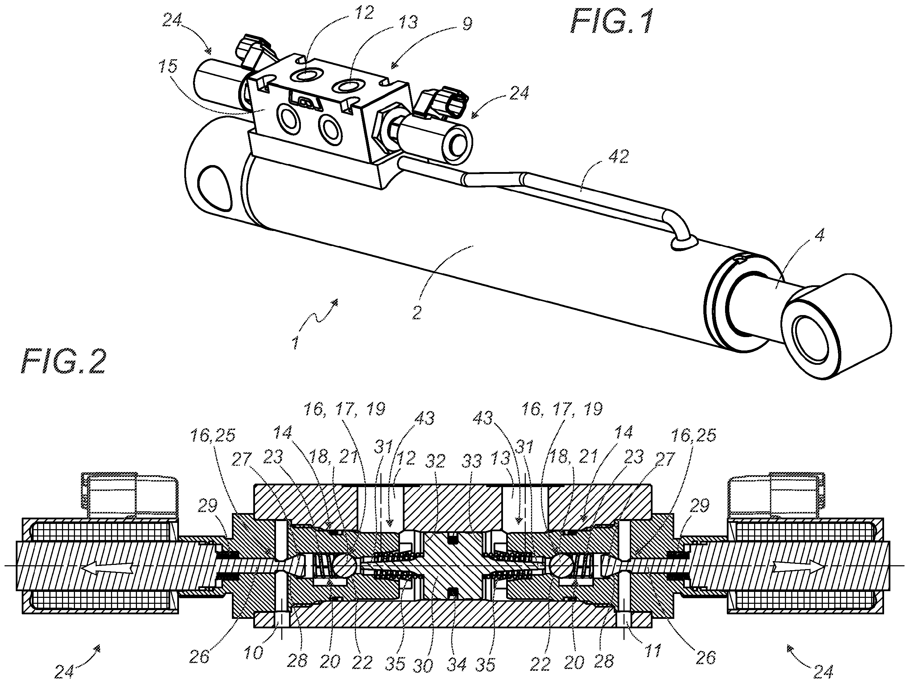

On a représenté sur les figures 1 à 8, un exemple de vérin 1 double-effet de sécurité selon l'invention.

Ce vérin 1 hydraulique comporte un fût 2, sensiblement cylindrique, à l'intérieur duquel se déplace un piston 3 sous l'effet de la pression d'un fluide hydraulique. Une tige 4 est classiquement montée sur le piston 3 et s'étend à l'intérieur du fût 2 d'un côté de ce piston 3 et jusqu' à l'extérieur du vérin 1 où elle peut être utilisée pour soulever des charges. Le piston 3 sépare donc l'espace intérieur du fût 2 en deux chambres hydrauliquement indépendantes : une chambre côté fond 5 et une chambre côté tige 6. Chacune de ces chambres comportent un orifice, respectivement 7 et 8, qui permet l'entrée ou la sortie du fluide hydraulique pour remplir ou vider la chambre concernée.

Selon l'invention, le vérin hydraulique 1 est équipé d'un bloc de sécurité 9 qui est monté sur le circuit hydraulique du vérin de manière que le fluide qui alimente et ressort des chambres du vérin passe par ce bloc de sécurité 9. Il est ainsi relié par sa sortie (orifice) 10 à l'orifice 7 de la chambre 5 du vérin, et par sa sortie (orifice) 11, via une conduite extérieure 42 rigide, à l'orifice 8 de la chambre 6 du vérin. D'autre part, il comporte deux entrées 12 et 13 qui sont reliées respectivement au circuit hydraulique d'alimentation de la chambre côté fond 5 et de la chambre côté tige 6 du vérin hydraulique 1.

Le bloc représenté comporte ainsi deux passages hydrauliques 43 dans lequel le fluide hydraulique est obligé de passer pour remplir ou vider les chambres du vérin, le premier reliant l'entrée 12 à la sortie 10 et ainsi à la chambre côté fond 5, et le deuxième reliant l'entrée 13 à la sortie 11 et ainsi à la chambre côté tige 6.

Afin d'éviter tout risque de fuite, ce bloc de sécurité 9 est préférentiellement flasqué ou intégré au fût 2 du vérin 1. Il peut également être rapporté sur celui-ci, et par exemple vissé au fût 2.

Le bloc de sécurité 9 représenté comprend deux dispositifs d'isolement 14. Ces deux dispositifs d'isolement 14 sont préférentiellement regroupés dans un carter ou corps 15 unique. Le dispositif est ainsi plus compact et plus économique à fabriquer. Il est également beaucoup plus simple et rapide à installer. En outre, on diminue ainsi les liaisons hydrauliques et les risques de fuite qui en découlent.

De préférence, le corps 15 est orienté longitudinalement par rapport au fût 2 du vérin, c'est-à-dire que son axe principal est parallèle à l'axe principal du fût 2.

Chacun des dispositifs d'isolement 14 comprend l'un des passages hydrauliques 43 et deux dispositifs d'obturation 16, disposés l'un à la suite de l'autre, en série. Ces dispositifs d'obturation 16 sont de nature différente.

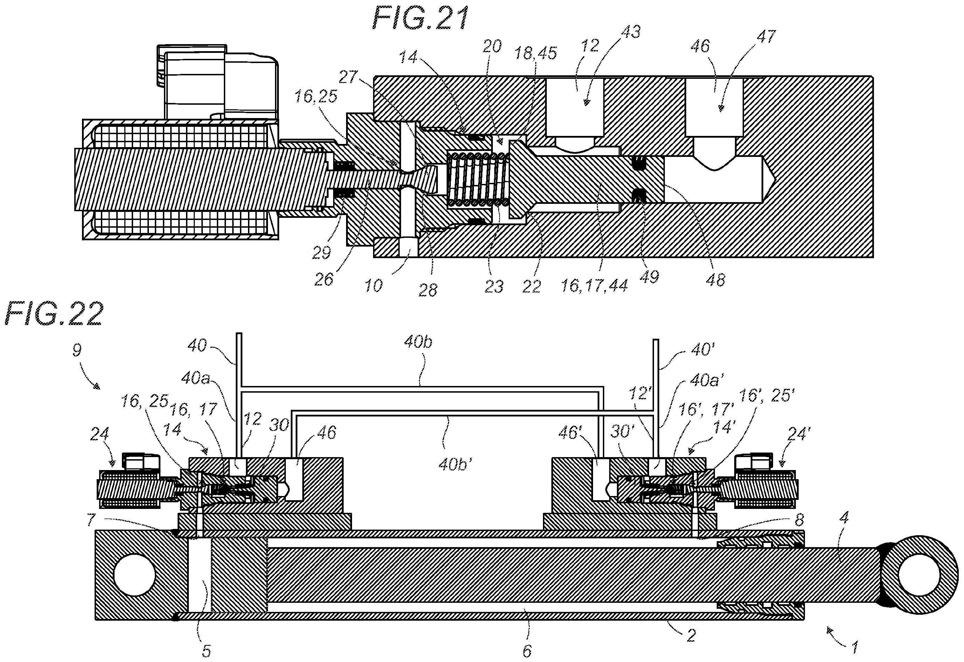

Le premier de ces dispositifs d'obturation 16 est un clapet anti-retour mécanique 17 à obturateur 18 qui est prévu passant sous l'action du fluide hydraulique dans le sens correspondant à l'entrée du fluide dans la chambre concernée. Ce clapet anti-retour mécanique 17 peut être de nature quelconque. Il s'agit par exemple d'un clapet anti-retour à pointeau conique 44 comme par exemple sur la figure 21 ou d'un clapet anti-retour à bille 19 comme représenté sur les autres figures.

Chacun des clapets anti-retour 17 représenté renferme un alésage 20 sensiblement cylindrique dans lequel se déplace un obturateur 18, bille 21 ou pointeau 45. Cet alésage 20 se termine par une partie plus étroite formant un siège 22 pour l'obturateur 18 lorsqu'il se retrouve en appui contre celui-ci, fermant ainsi le clapet de manière étanche. En l'absence de fluide hydraulique ou d'une force suffisante agissant sur l'obturateur 18 en sens contraire, l'obturateur 18 est maintenu en appui contre son siège 22 de préférence par un ressort de rappel 23 se trouvant dans l'alésage 20.

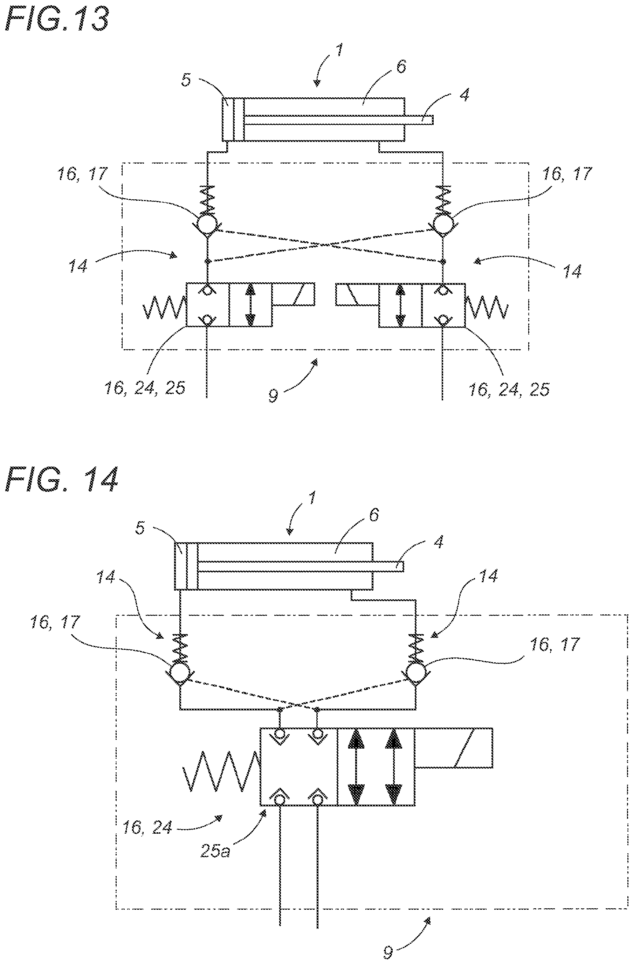

Le deuxième de ces dispositifs d'obturation 16 est un préactionneur hydraulique 24 dont l'ouverture et la fermeture sont indépendantes de la présence ou de l'absence du fluide hydraulique dans le passage hydraulique 43 concerné. Il s'agit préférentiellement d'une électrovanne 25, par exemple à clapet, comme représentée sur les figures. Sur les exemples de réalisation illustrés sur les figures 1 à 9, 11, 13 et 15 à 20, le deuxième dispositif d'obturation 16 est une électrovanne 25 pour chaque dispositif d'isolement 14. Un préactionneur 24 d'un autre type ou commandé différemment, ou encore une configuration différente sont cependant également envisageables comme par exemple celle représentée sur la figure 14.

L'électrovanne 25 à clapet représentée comporte une tige 26 terminée par un obturateur conique 27 qui est reçu dans un siège 28 de forme conique complémentaire et qui ferme le clapet de manière étanche lorsqu'il se retrouve en appui sur celui-ci.

La position de la tige 26 est commandée électriquement et par là celle de l'obturateur conique 27 qui se trouve alternativement plaqué contre ou éloigné du siège 28. En l'absence d'électricité, l'obturateur conique 27 est préférentiellement maintenu en appui sur son siège 28 par un ressort de rappel 29 qui assure ainsi une sécurité positive s'opposant à toute circulation de fluide hydraulique en absence d'électricité.

Les sièges 22 et 28 des dispositifs d'obturation 16 peuvent être conformés directement dans la pièce formant le corps 15 du dispositif d'isolement 14, ou peuvent également être réalisés dans une pièce indépendante qui est montée sur le corps du dispositif d'isolement. Cette pièce indépendante peut être avantageusement réalisée dans une autre matière que celle du corps du dispositif d'isolement 14, notamment du bronze, du plastique ou autre. Dans ce cas, un joint, par exemple torique, peut venir si nécessaire compléter l'étanchéité à ce niveau.

Les deux dispositifs d'obturation 16 étant de nature complètement différente, l'un étant actionné mécaniquement directement par la pression du fluide présent dans le passage hydraulique 43, et l'autre étant commandé par exemple électriquement, et étant réalisés avec des obturateurs préférentiellement différents sans mode commun, la sécurité est renforcée par rapport aux dispositifs antérieurs connus. Il est en effet très peu probable qu'ils fuient simultanément, que ce soit dès le début ou au fil du temps, les pièces ne provenant pas des mêmes séries et évoluant différemment au fil du temps. Une fuite simultanée de ces deux dispositifs d'obturation 16 qui se succèdent est donc hautement improbable, ce qui rend les dispositifs d'isolement 14 et le bloc de sécurité 9 qui les contient, extrêmement sécuritaires.

Dans les exemples préférentiels représentés, les deux dispositifs d'obturation 16 sont disposés à la suite l'un de l'autre, le siège 28 du clapet de l'électrovanne 25 étant conformé dans le prolongement de l'alésage 20. Il est cependant, envisageable qu'un ou plusieurs éléments soit interposé entre les deux dispositifs d'obturation 16 en série.

Dans l'exemple représenté sur les figures 1 à 9, le préactionneur 24 (ici l'électrovanne 25) est disposé du côté le plus proche de la chambre concernée du vérin, par rapport au clapet anti-retour mécanique 17. Cependant, d'autres dispositions sont envisageables.

Ainsi, cette disposition peut être inversée comme représenté schématiquement sur la figure 13, le clapet anti-retour mécanique 17 étant alors disposé du côté le plus proche de la chambre concernée du vérin par rapport au préactionneur 24 (électrovanne 25).

Bien que plus difficile à implanter que la précédente, cette disposition est avantageusement plus sécuritaire car elle permet de garantir une double sécurité de verrouillage par les deux dispositifs d'obturation 16 en série, même lorsque le circuit est sous pression, c'est-à-dire lorsqu'un fluide sous pression est envoyé dans le circuit hydraulique d'alimentation et arrive par l'une des entrées 12 ou 13, le préactionneur hydraulique 24 (électrovanne 25) et le clapet anti-retour mécanique 17 restant fermés.

Néanmoins, quelle que soit la disposition, dans le cas d'un vérin 1 double effet comme représenté sur les figures 1 à 9, la sécurité est également assurée par le préactionneur 24 du deuxième dispositif d'isolement 14 qui, tant qu'il reste fermé, empêche le fluide de sortir de l'autre chambre du vérin et qui verrouille ainsi le débit hydraulique empêchant tout mouvement de la tige du vérin.

Alternativement, comme représenté sur la figure 14, les deux dispositifs d'isolement 14 peuvent comporter un unique préactionneur hydraulique 24 commun, servant pour les deux passages hydrauliques43 des deux dispositifs d'isolement 14, par exemple sous la forme d'une vanne à quatre orifices 25a.

Le second dispositif d'obturation 16 est ainsi une unique vanne à quatre orifices 25a, montée sur les deux passages hydrauliques 43, en série par rapport aux clapets anti-retour mécaniques 17 du premier dispositif d'obturation 16, qui obture ou libère simultanément les deux passages hydrauliques 43 selon qu'elle est commandée ou non, c'est-à-dire selon qu'elle est alimentée électriquement ou non dans le cas préférentiel représenté d'une électrovanne.

L'avantage d'un tel mode de réalisation est qu'il n'utilise qu'un seul préactionneur hydraulique 24 (vanne à quatre orifice 25a) pour les deux passages hydrauliques 43 et donc les deux dispositifs d'isolement 14, et qu'un seul dispositif de commande (alimentation électrique par exemple) par bloc de sécurité 9 est donc suffisant pour celui-ci. En outre, avec ce mode de réalisation, on évite toute possibilité de décalage entre les deux dispositifs d'isolement 14 lors de l'ouverture ou de la fermeture des deuxièmes dispositifs d'obturation 16.

Le bloc de sécurité 9 représenté sur les figures 2 à 8 comporte en outre une pièce de commande 30 susceptible de provoquer l'ouverture du clapet anti-retour mécanique 17. Il s'agit d'une pièce mécanique située à proximité du clapet anti-retour mécanique 17 et qui se déplace en direction de celui-ci, afin de venir pousser son obturateur 18 pour provoquer son ouverture.

Dans le cas du clapet à bille 19 représenté, la pièce de commande 30 comporte pour cela un doigt latéral saillant 31, qui s'étend en direction du clapet 19 et qui est susceptible de venir s'engager à travers le siège 22 de ce clapet, afin de pousser la bille 21 et provoquer ainsi l'ouverture du clapet 19.

Comme représenté, la pièce de commande 30 peut avantageusement être une navette coulissante servant de frontière aux deux circuits hydrauliques séparés qui alimentent indépendamment les deux chambres 5 et 6 du vérin 1. Chacune des faces latérales 32 et 33 de cette navette est ainsi en communication avec l'un de ces circuits hydrauliques.

Un joint périmétrique 34 monté sur cette navette peut optionnellement compléter la barrière formée par celle-ci et assurer l'étanchéité entre les deux circuits hydrauliques, tout en autorisant le coulissement longitudinal de la pièce de commande 30. Ce joint permet ainsi de garantir que la totalité du fluide hydraulique envoyé se retrouve dans la chambre correspondante du vérin et provoque une rentrée ou sortie de la tige 4 du vérin de la longueur attendue. Ceci est particulièrement important dans le cas où le vérin fait partie d'un ensemble de plusieurs vérins devant agir de manière symétrique.

Sans ce joint, une partie du fluide hydraulique envoyé pourrait passer de l'autre côté et s'échapper par l'autre entrée, provoquant ainsi une perte de pression hydraulique qui n'est pas forcément gênante selon les applications.

Avec un tel mode de réalisation, le déplacement de la pièce de commande 30 en direction du clapet anti-retour mécanique 17 est provoqué automatiquement par la pression du fluide hydraulique.

En l'absence de fluide ou en cas de pression hydraulique insuffisante, la pièce de commande 30 est préférentiellement maintenue éloignée du clapet anti-retour mécanique 17 par un ressort de rappel 35.

Sur le mode de réalisation préférentiel représenté, les deux dispositifs d'isolement 14 sont en outre jumelés, c'est-à-dire que leur fonctionnement est lié l'un à l'autre et n'est pas indépendant.

Pour cela, le bloc de sécurité 9 ne comporte qu'une unique pièce de commande 30, disposée entre les deux passages hydrauliques 43 des deux dispositifs d'isolement 14, et capable de provoquer alternativement l'ouverture du clapet anti-retour mécanique 17 de chacun de ces deux dispositifs d'isolement 14.

Cette pièce de commande 30 unique est préférentiellement une navette centrale coulissante qui comporte sur chacune de ces faces latérales 32 et 33 un doigt latéral saillant 31, s'étendant en direction de l'un des passages hydrauliques 43. Ainsi, lorsque cette pièce de commande 30 se déplace en direction de l'un de ces passages hydrauliques 43, le doigt latéral saillant 31 situé de ce côté vient pousser l'obturateur 18, ici la bille 21, du clapet anti-retour 17 concerné et provoque ainsi son ouverture.

Les doigts latéraux saillants 31 de la pièce de commande 30 sont cependant prévus trop courts par construction, pour atteindre simultanément les deux obturateurs 18 des deux clapets anti-retours mécaniques 17. Un jeu longitudinal est ainsi garanti, et même en cas de mauvais positionnement, la pièce de commande 30 ne peut pas provoquer l'ouverture simultanée des deux clapets anti-retours mécaniques 17 des deux passages hydrauliques 43.

Avantageusement, la pièce de commande 30 peut être retenue en position centrale, entre les deux dispositifs d'isolement 14, par deux ressorts de rappel 35 opposés, qui, lorsqu'ils sont présents, agissent chacun sur l'une des faces latérales 32, 33 de la pièce de commande 30 unique pour la ramener en position sensiblement centrale. De même, lorsque la pièce de commande 30 unique se trouve dans cette position centrale, ses doigts latéraux saillants 31 sont trop courts par construction pour atteindre les obturateurs 18 des clapets anti-retour mécaniques 17 en vis-à-vis.

Alternativement, des modes de réalisation comportant une pièce de commande 30 séparée pour le clapet anti-retour mécanique 17 de chacun des passages hydrauliques 43 sont également possibles, comme par exemple celui illustré sur la figure 22.

Enfin, des modes de réalisation sans pièce de commande sont également possible, comme par exemple celui représenté sur la figure 21. Dans ce cas, le clapet anti-retour mécanique 17 est forcé en ouverture directement par la pression du fluide hydraulique comme il sera expliqué par la suite et non plus indirectement via la pièce de commande 30.

Le fonctionnement du bloc de sécurité 9 représenté sur la figure 2 découle de manière évidente des moyens décrits ci-dessus et va maintenant être expliqué plus en détail, en référence aux figures 2 à 8.

Afin de faciliter la compréhension, sur ces figures, la circulation du fluide hydraulique est symbolisée par des flèches fines de couleur noire et le déplacement des pièces mécaniques par des flèches épaisses de couleur blanche.

Le bloc de sécurité 9 présente quatre états de fonctionnement différents, selon que l'opérateur commande la sortie ou la rentrée de la tige 4 de ce vérin, la sortie ou la rentrée de la tige d'un autre vérin du circuit hydraulique ou en l'absence de commande de sa part.

### Etat verrouillé (figure 2)

Cet état verrouillé correspond à une position sécuritaire d'équilibre, dans laquelle tous les vérins du circuit sont maintenus immobiles éventuellement sous charge, et dans laquelle l'opérateur ne donne aucune commande. Dans le cas d'un véhicule, il s'agit par exemple de la position de sécurité adoptée pendant le roulage du véhicule.

En l'absence de commande de la part de l'opérateur, l'alimentation électrique des électrovannes 25 est coupée. En l'absence d'électricité, ces électrovannes 25 sont fermées, les ressorts de rappel 29 poussant les tiges 26 de manière à plaquer les obturateurs coniques 27 contre leur sièges 28.

En outre, aucun fluide hydraulique n'arrive par les entrées 12 et 13 du bloc de sécurité 9. Sous l'action des ressorts 35, la pièce de commande 30 est en position d'équilibre centrale ou quasi-centrale et son ou ses doigts latéraux saillants 31 sont éloignés des billes 21 des clapets anti-retour mécaniques 17.

Dans une variante ne comportant pas de ressorts 35, la pièce de commande 30 se trouverait dans une position aléatoire entre les deux clapets anti-retour mécaniques 17. Cependant, même si l'un de ses doigts latéraux saillants 31 était en contact avec la bille 21 de l'un de ces clapets anti-retour mécanique 17, la masse et l'inertie de la pièce de commande 30 seraient trop faibles pour que son doigt latéral saillant 31 puisse pousser la bille 21 suffisamment fort pour provoquer l'ouverture du clapet anti-retour 17 concerné en l'absence de pression hydraulique, sous l'effet des vibrations par exemple.

Les deux clapets anti-retour mécaniques 17 sont en position fermée, leur bille 21 étant plaquée contre leur siège 22 respectif de manière étanche par les ressorts de rappel 23. Ainsi, chacune des chambres côté fond 5 et côté tige 6 du vérin est verrouillée de manière étanche par deux dispositifs d'obturation 16 successifs, le fluide hydraulique présent dans ces chambres ne pouvant s'en échapper. La position de la tige est donc bloquée par le verrouillage du débit hydraulique.

Cet état est particulièrement sécuritaire, car la position de la tige à l'état chargé est maintenue même en cas de fuite interne entre les deux chambres du vérin. En effet, en cas de transfert d'huile de la chambre côté fond 5 à la chambre côté tige 6, la pression monte dans les deux chambres 5, 6 du vérin 1. Mais comme l'huile, qui est incompressible, ne peut s'échapper à travers le dispositif d'isolement 14 du bloc de sécurité 9 dont les deux dispositifs d'obturation 16 successifs sont fermés, le piston 3 ne peut pas se déplacer et faire rentrer la tige 4 en réduisant le volume global dans lequel se trouve le fluide. La charge est ainsi maintenue en toute sécurité.

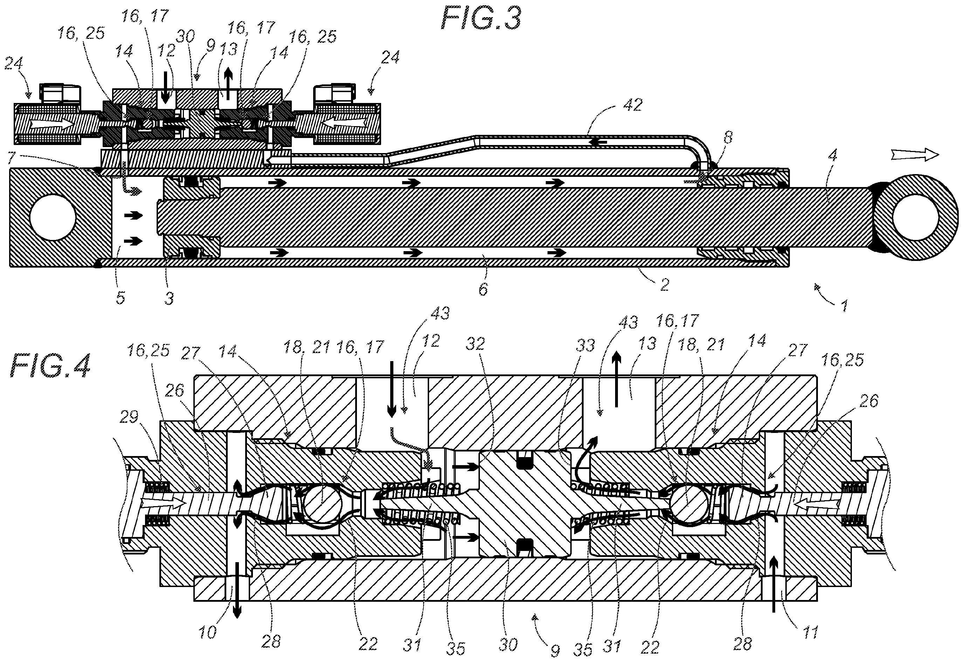

### Sortie de la tige du vérin (figures 3 et 4)

Lorsque l'opérateur souhaite commander un mouvement de la tige 4 du vérin 1, il commence par alimenter électriquement les deux électrovannes 25 du bloc de sécurité 9 du vérin concerné. En présence d'électricité et comme symbolisé par les flèches blanches, les tiges 26 des électrovannes se déplacent et éloignent les obturateurs coniques 27 de leur sièges 28. Les électrovannes 25 sont alors ouvertes.

Pour obtenir la sortie de la tige 4 du vérin 1, l'opérateur commande ensuite l'envoi d'huile sous pression par l'entrée 12 du bloc de sécurité 9, afin de venir remplir la chambre côté fond 5 du vérin 1, en passant par le passage hydraulique 43 correspondant et l'orifice 7.

Ce fluide sous pression, pénétrant par l'entrée 12, vient appuyer contre la face latérale 32 de la pièce de commande 30 et pousse cette dernière loin du dispositif d'isolement 14 côté fond, vers le dispositif d'isolement 14 côté tige.

Dans le dispositif d'isolement 14 côté fond, le fluide sous pression vient pousser la bille 21 du clapet anti-retour mécanique 17. Sous la pression du fluide, celle-ci se décolle de son siège 22 et laisse entrer le fluide sous pression. Le dispositif d'isolement 14 côté fond est alors entièrement ouvert et passant. Le fluide hydraulique sous pression poursuit son chemin dans le passage hydraulique 43 à travers l'électrovanne 25 puis jusqu'à la sortie 10 du bloc de sécurité 9. Il pénètre alors dans la chambre côté fond 5 du vérin 1 par son orifice 7. L'huile sous pression vient pousser le piston 3, provoquant ainsi son déplacement vers la chambre côté tige 6 et la sortie de la tige 4 vers l'extérieur du vérin.

Simultanément, le fluide hydraulique présent dans la chambre côté tige 6, chassé par le déplacement du piston 3, s'échappe hors de celle-ci à travers l'orifice 8, circule dans la conduite extérieure 42 et pénètre dans le bloc de sécurité 9 par sa sortie 11.

Le fluide hydraulique arrive alors au niveau du passage hydraulique 43 du deuxième dispositif d'isolement 14 du bloc de sécurité 9 dont l'électrovanne 25 a été ouverte électriquement et dont le clapet anti-retour mécanique 17 est forcé en ouverture par la pièce de commande 30. En effet, sous la pression du fluide hydraulique entrant par l'entrée 12, la pièce de commande 30 s'est rapprochée du clapet anti-retour mécanique 17 du dispositif d'isolement 14 côté tige, et son doigt latéral saillant 31 prenant naissance de la face latérale 33 a poussé la bille 21 hors de son siège 22.

Le fluide hydraulique peut donc traverser le passage hydraulique 43 du dispositif d'isolement 14 côté tige, dont les deux dispositifs d'obturation 16 sont ouverts, et quitter le bloc de sécurité 9 par son entrée 13 pour retourner au réservoir.

Lorsque la tige 4 du vérin a atteint la position souhaitée, l'opérateur stoppe la commande du distributeur hydraulique et plus aucun fluide n'arrive par l'entrée 12 du bloc de sécurité 9. Plus aucune pression ne s'exerce alors sur la face latérale 32 de la pièce de commande 30 qui retrouve sa position d'équilibre centrale sous l'effet de la pression hydraulique et du ou des ressorts de rappel 35 s'ils sont prévus. Dans cette position, la pièce de commande 30 est éloignée des dispositifs d'isolement 14 et ne peut commander l'ouverture de leurs clapets anti-retour mécanique 17.

En l'absence, d'une part de pression de fluide hydraulique pour le dispositif d'isolement 14 côté fond, et d'autre part de poussée par le doigt latéral saillant 31 pour le dispositif d'isolement 14 côté tige, les billes 21 des deux clapets anti-retour mécaniques 17 reviennent automatiquement se centrer sur leur siège 22 sous l'effet de la pression hydraulique et de leurs ressorts de rappel 23 respectifs s'ils en sont pourvus, et referment ces clapets de manière étanche.

Le bloc de sécurité 9 se retrouve alors en position fermée.

Pour améliorer la sécurité, l'opérateur déconnecte les électrovannes 25 du bloc de sécurité 9, qui privées d'électricité repassent automatiquement en position fermée, les ressorts de rappel 29 repoussant les tiges 26 ce qui provoque le retour des obturateurs coniques 27 contre leur sièges 28.

Le bloc de sécurité 9 et le vérin 1 associé se retrouvent alors à l'état verrouillé sécuritaire décrit précédemment.

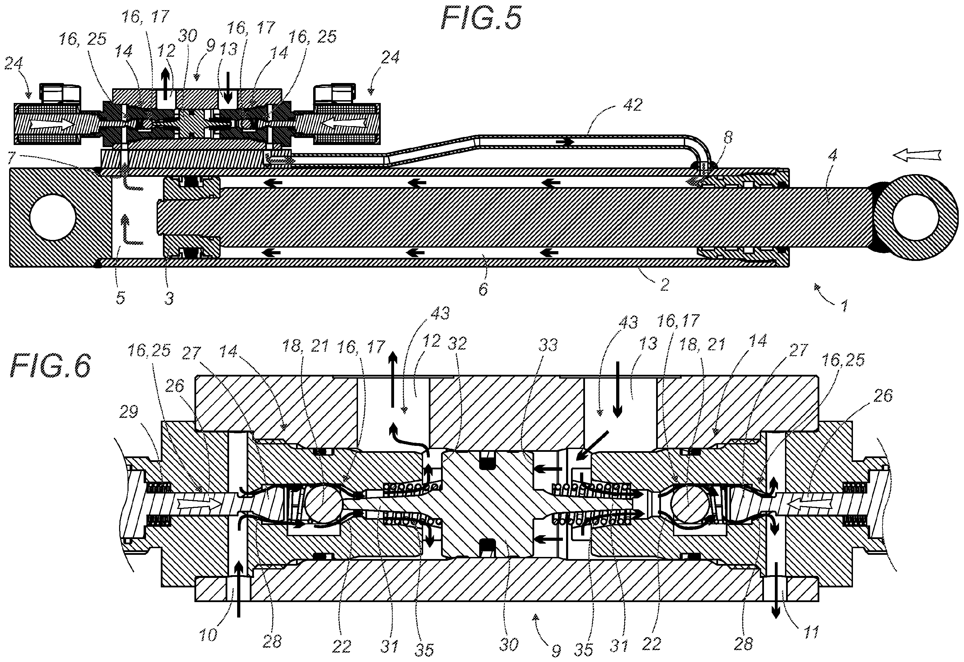

### Rentrée de la tige du vérin (figures 5 et 6)

Lorsque l'opérateur souhaite commander la rentrée de la tige 4 du vérin 1, il commence comme précédemment par alimenter électriquement les deux électrovannes 25 du bloc de sécurité 9 du vérin concerné, afin de provoquer leur ouverture.

Il commande ensuite l'arrivée d'huile sous pression cette fois par l'entrée 13 du bloc de sécurité 9 afin de venir remplir la chambre côté tige 6 du vérin 1 en passant par la sortie 11 du bloc de sécurité 9, la conduite extérieure 42 et l'orifice 8 de la chambre. Ce fluide sous pression vient appuyer contre la face latérale 33 de la pièce de commande 30 et pousse cette dernière en direction du dispositif d'isolement 14 côté fond. Cela provoque l'ouverture de clapet anti-retour mécanique 17 du dispositif d'isolement 14 côté fond, car le doigt latéral saillant 31 de la face latérale 32 de la pièce de commande 30 vient pousser la bille 21 hors de son siège 22.

Le fluide hydraulique qui arrive au niveau du dispositif d'isolement 14 côté tige, peut le traverser, en passant par le clapet anti-retour mécanique 17 dont il pousse la bille 21, puis l'électrovanne 25, et aller remplir la chambre côté tige 6 du vérin.

Simultanément, le fluide hydraulique présent dans la chambre côté fond 5, chassé par le déplacement du piston 3, est évacué par l'orifice 7 à travers le bloc de sécurité 9. Il rentre par la sortie 10 dans le dispositif d'isolement 14 côté fond, dont les deux dispositifs d'obturation 16 sont ouverts, et traverse le passage hydraulique 43 correspondant. Il quitte ensuite le bloc de sécurité 9 par son entrée 12 pour retourner au réservoir.

Lorsque la tige 4 du vérin a atteint la position souhaitée, l'opérateur stoppe la commande du distributeur hydraulique et plus aucun fluide n'arrive par l'entrée 13 du bloc de sécurité 9.

Comme expliqué précédemment, la pièce de commande 30 retrouve sa position d'équilibre centrale et les billes 21 des deux clapets anti-retour mécaniques 17 reviennent automatiquement se centrer sur leur siège 22 refermant ces clapets de manière étanche. Le bloc de sécurité 9 est alors en position fermée.

En déconnectant l'alimentation électrique des électrovannes 25 du bloc de sécurité 9, l'opérateur provoque leur fermeture et replace le bloc de sécurité 9 et le vérin 1 associé dans leur état verrouillé de sécurité décrit précédemment.

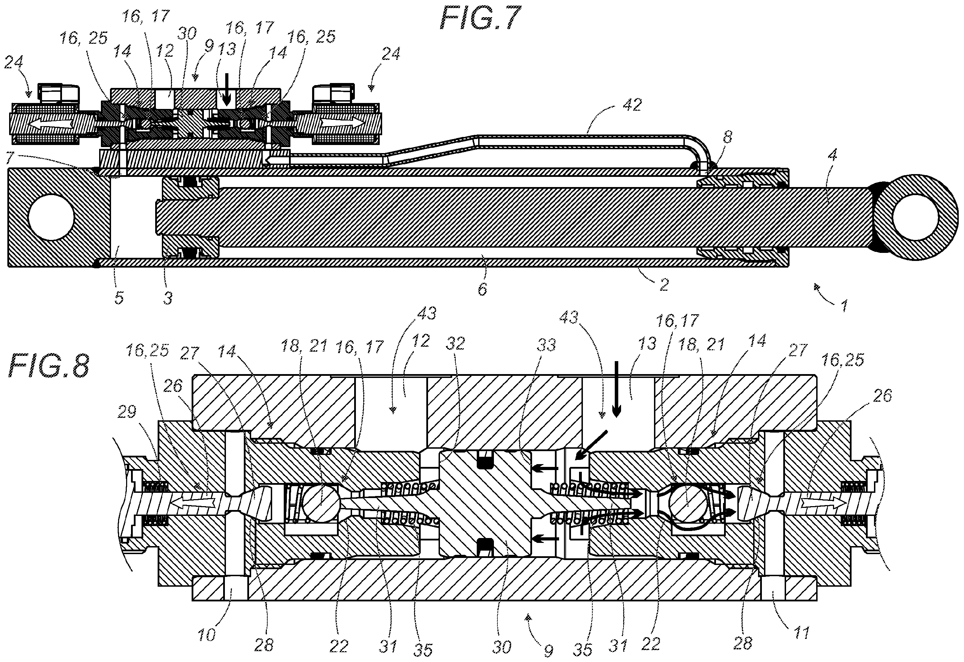

### Etat inactif du vérin (figures 7 et 8)

Lorsque l'opérateur souhaite commander un mouvement d'un vérin du circuit hydraulique tout en laissant les autres vérins immobiles, il procède comme expliqué précédemment pour le vérin actif.

Les blocs de sécurité 9 des autres vérins du circuit hydraulique sont à l'état inactif représenté sur les figures 7 et 8. Ils garantissent ainsi le maintien en position des vérins non choisis dont les tiges 4 restent immobiles.

Dans cet état inactif, les électrovannes 25 du bloc de sécurité 9 ne sont pas alimentées électriquement. Elles restent donc fermées et s'opposent au passage du fluide hydraulique sous pression qui arrive par l'une des entrées 12 ou 13 du bloc de sécurité 9 (selon la nature du mouvement commandé pour le vérin actif) et qui peut éventuellement provoquer l'ouverture des clapets anti-retour mécaniques 17. Elles s'opposent également au retour du fluide hydraulique vers le réservoir.

Même si les clapets anti-retour mécaniques 17 sont ouverts, les électrovannes 25 qui restent fermées s'opposent à l'entrée et à la sortie de fluide dans et hors des chambres du vérin. La tige du vérin reste donc immobile.

Le fonctionnement avantageux des blocs de sécurité 9 selon l'invention au sein d'un circuit hydraulique complet va maintenant être expliqué.

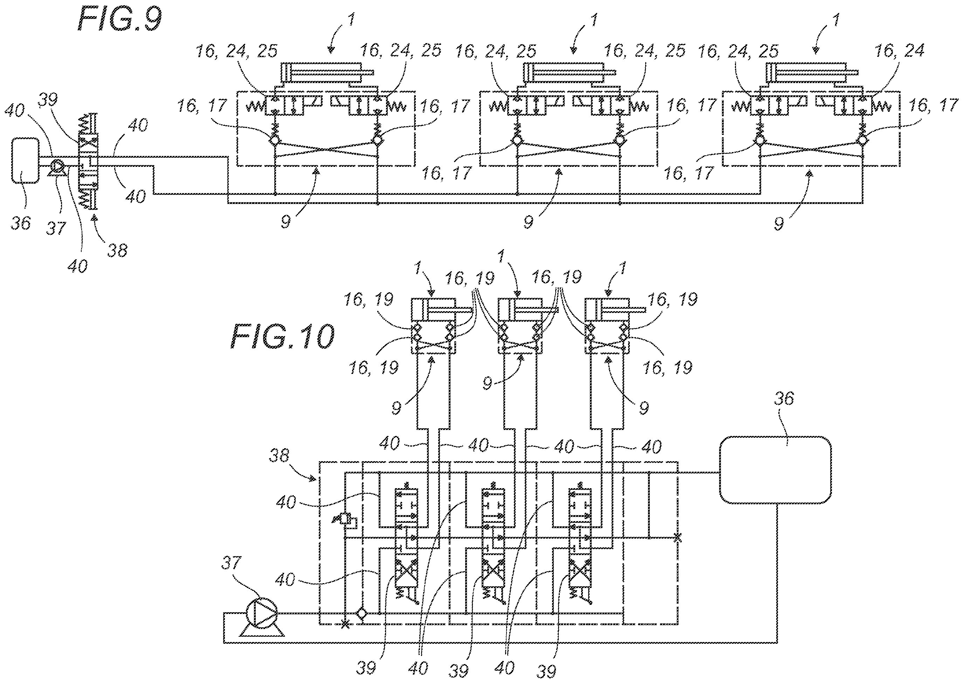

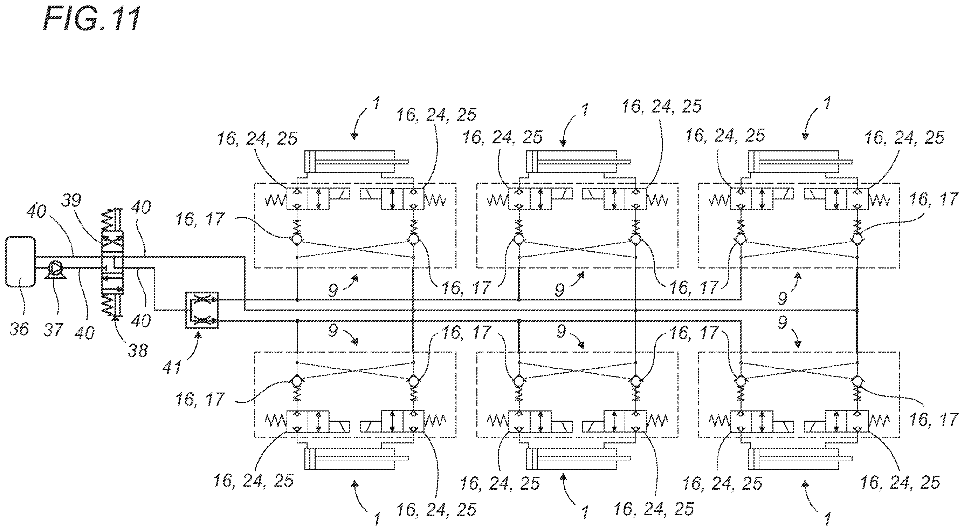

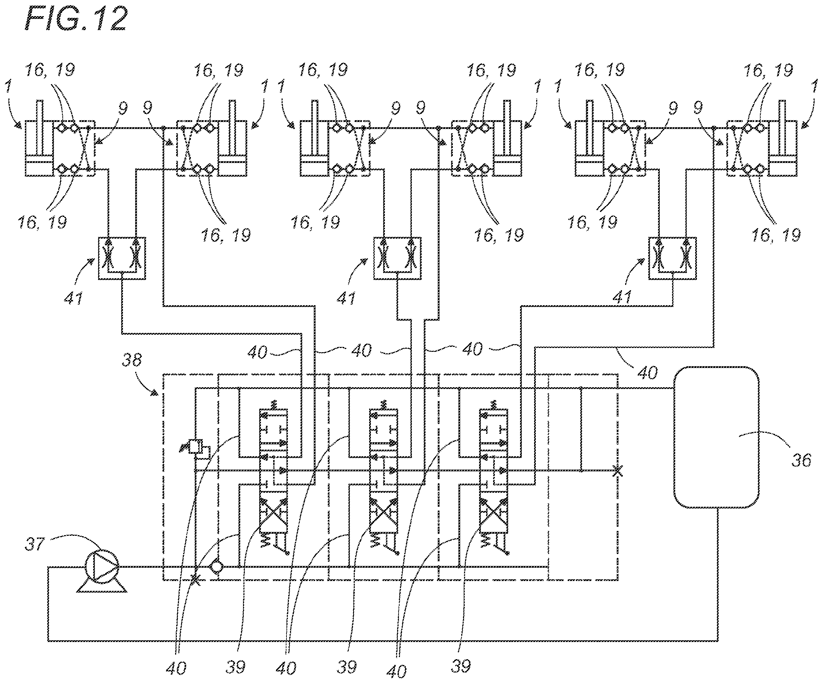

Afin de faire apparaitre les avantages importants conférés par l'invention, on a représenté, sur les figures 9 à 12, deux exemples de circuits hydrauliques comprenant plusieurs vérins 1 double-effet équipés de blocs de sécurité 9, comparativement selon le premier mode de réalisation de l'invention (figures 9 et 11) et selon l'art antérieur (figure 10 et 12).

Bien que les vérins choisis pour les exemples de circuits hydrauliques représentés soient des vérins double-effet, des avantages comparables peuvent être obtenus avec des vérins simple-effet. De même, des blocs de sécurités avec des préactionneurs hydrauliques 24 de nature différente, ou dans lesquels la disposition des préactionneurs et des clapets anti-retours mécaniques serait inversée pourraient également être utilisés.

Dans les circuits selon l'art antérieur représentés sur les figures 10 et 12, les blocs de sécurité 9 sont conformes à ceux décrits dans la demande de brevet antérieure EP3436706 citée dans l'introduction. Chacun de leur dispositif d'isolement 14 comporte deux dispositifs d'obturation 16 en série qui sont à chaque fois des clapets anti-retour à bille 19. De ce fait, l'ouverture des deux clapets anti-retour est forcément liée et se produit dès que du fluide hydraulique sous pression arrive à l'une des entrées du bloc de sécurité 9, ce qui se traduit automatiquement par un mouvement de la tige du vérin (en rentrée ou en sortie selon le côté d'alimentation).

Le premier exemple de circuit hydraulique comprend trois vérins 1 que l'on souhaite pouvoir actionner indépendamment les uns des autres. Chacun de ces vérins 1 est équipé d'un bloc de sécurité 9.

Le fluide hydraulique provient d'un réservoir 36 et est envoyé dans le circuit par un dispositif de pompage 37.

Comme illustré sur la figure 10, pour pouvoir commander les vérins 1 indépendamment les uns des autres, il est nécessaire avec les blocs de sécurité 9 de l'art antérieur, d'intercaler entre le dispositif de pompage 37 et les vérins 1, un bloc de distribution 38 regroupant autant de distributeurs hydrauliques 39 que de vérins 1, chacun de ces distributeurs hydrauliques 39 étant dédié à l'alimentation d'un unique vérin 1 via son bloc de sécurité 9.

Chacun des distributeurs hydrauliques 39 comporte trois positions. La première interrompt la circulation du fluide hydraulique pour maintenir le vérin en position. Il s'agit de la position de repos où aucun débit ne sort vers les vérins, qui correspond généralement à une position centrée du tiroir obtenue grâce à des ressorts de rappel. La deuxième met en communication le dispositif de pompage 37 avec la chambre coté fond 5 et le réservoir 36 avec la chambre coté tige 6 du vérin 1 correspondant pour commander la sortie de la tige du vérin, et la troisième met en communication le dispositif de pompage 37 avec la chambre coté tige 6 et le réservoir 36 avec la chambre coté fond 5 du vérin correspondant pour commander la rentrée de la tige du vérin.

Le circuit hydraulique comporte en outre de nombreux passages ou tuyaux 40. En effet, quelle que soit la configuration du circuit, il doit être prévu au minimum deux passages ou tuyaux 40 à l'entrée et deux passages ou tuyaux 40 à la sortie de chacun des distributeurs hydrauliques 39 afin de leur permettre de remplir leur fonction, ce qui fait au minimum six passages ou tuyaux 40 à l'entrée et à la sortie du bloc de distribution 38 pour un circuit à trois vérins.

Lorsque l'opérateur souhaite commander le mouvement d'un des vérins 1, il commence par commander la mise en route du dispositif de pompage 37 pour envoyer le fluide hydraulique dans le circuit.

Par défaut, l'ensemble des distributeurs se trouvent automatiquement dans la première position sous l'action des ressorts de rappel qui positionnent les tiroirs en position centrale où aucun débit ne traverse le distributeur. Les vérins ne sont donc pas alimentés en fluide hydraulique.

L'opérateur doit ensuite placer le distributeur correspondant au vérin à actionner dans la deuxième ou la troisième position selon qu'il souhaite faire sortir ou rentrer la tige du vérin, la commande de ce distributeur étant généralement manuelle.

Lorsque la tige du vérin a atteint la position souhaitée, l'opérateur replace le distributeur hydraulique 39 correspondant dans la première position et peut ensuite actionner un autre vérin ou arrêter le dispositif de pompage 37 afin de stopper la circulation de fluide hydraulique.

Comme illustré sur la figure 9, la situation est beaucoup plus simple avec des blocs de sécurité 9 conformes à l'invention.

En effet, comme les préactionneurs 24 des blocs de sécurité 9 peuvent rester fermés même en présence de fluide hydraulique sous pression, il est possible d'envoyer du fluide hydraulique sous pression aux blocs de sécurité 9 sans forcément alimenter les vérins correspondant et provoquer le mouvement de leur tige.

Le bloc de distribution 38 du circuit hydraulique selon l'invention ne comporte donc qu'un unique distributeur hydraulique 39 qui est relié à l'ensemble des vérins 1 du circuit. Comme précédemment, ce distributeur hydraulique 39 comporte trois positions, la première interrompant la circulation du fluide hydraulique, la deuxième mettant en communication le dispositif de pompage 37 avec simultanément toutes les chambres coté fond 5 de tous les vérins 1 et le réservoir 36 avec simultanément toutes les chambres coté tige 6 de tous les vérins 1, et la troisième mettant en communication le dispositif de pompage 37 avec simultanément toutes les chambres coté tige 6 de tous les vérins 1 et le réservoir avec simultanément toutes les chambres coté fond 5 de tous les vérins 1.

Avantageusement, ce distributeur 39 peut être à effet proportionnel afin de permettre à l'opérateur de gérer la vitesse d'entrée ou de sortie des vérins 1.

Le circuit hydraulique comporte beaucoup moins de tuyaux 40 que dans l'exemple précédent, car seuls deux tuyaux 40 sont nécessaires à l'entrée et à la sortie du bloc de distribution 38 et ceci quel que soit le nombre de vérins du circuit.

En outre, il est très facile de rajouter de nouveaux vérins 1 dans le circuit hydraulique selon l'invention car ni le bloc de distribution 38, ni les tuyaux 40 à l'entrée et à la sortie du bloc de distribution 38 ne sont à modifier. Il suffit simplement de raccorder un nouveau vérin 1 équipé de son bloc de sécurité 9 sans avoir à rajouter de nouveaux tuyaux 40 à la sortie du bloc de distribution 38.

Lorsque l'opérateur souhaite commander le mouvement d'un des vérins 1, il commande l'ouverture des deux préactionneurs 24 du bloc de sécurité 9 du vérin concerné, par exemple en les alimentant électriquement s'il s'agit d'électrovannes 25. Les préactionneurs 24 des blocs de sécurité de tous les autres vérins sont maintenues fermés, par exemple pour des électrovannes 25 en les laissant hors tension électrique. La commande de ces électrovannes 25 peut facilement être réalisée à distance, de manière ergonomique pour l'opérateur par exemple au moyen d'un tableau de contrôle à boutons, d'un dispositif au niveau du tableau de bord du véhicule, ou encore au moyen d'un dispositif sans fil tel qu'une télécommande, une tablette, un ordinateur portable ou un smartphone.

L'opérateur n'a plus alors qu'à placer le distributeur hydraulique 39 unique du bloc de distribution 38 dans la deuxième ou la troisième position selon l'action qu'il souhaite réaliser (sortie ou rentrée de la tige du vérin), le dispositif de pompage 37 ayant été préalablement mis en route pour envoyer le fluide hydraulique dans le circuit hydraulique.

Le fluide hydraulique est alors envoyé en direction de l'ensemble des vérins 1, mais comme tous les préactionneurs 24 sont fermés à l'exception de celui du vérin 1 choisi, le fluide hydraulique ne traverse pas les blocs de sécurité 9 des autres vérins et ne pénètre pas dans les chambres de ceux-ci. Bien que sous pression hydraulique, les vérins non choisis restent bloqués en position.

Lorsque la tige du vérin 1 choisi atteint la position souhaitée, l'opérateur replace le distributeur hydraulique 39 correspondant dans la troisième position.

L'alimentation électrique des électrovannes 25 du vérin 1 choisi est également coupée, afin de refermer ces électrovannes 25 et ainsi de placer le bloc de sécurité à l'état verrouillé.

Bien entendu, il est également possible de réaliser les opérations dans un ordre différent, c'est-à-dire mettre en marche le dispositif de pompage 37 après que le distributeur hydraulique 39 et les électrovannes 25 du vérin 1 choisi aient été actionnés, ou encore actionner le distributeur hydraulique 39 avant l'électrovanne 25 du vérin 1 choisi (les autres électrovannes 25 étant fermées par défaut).

Le deuxième exemple de circuit hydraulique représenté sur les figures 11 et 12 comprend six vérins 1 équipés d'un bloc de sécurité 9, qui sont organisés en trois paires de deux vérins 1 que l'on souhaite pouvoir actionner indépendamment les unes des autres. Ce type de circuits où les vérins fonctionnent par paires se rencontre fréquemment en pratique. Ils sont par exemples utilisés dans les applications de véhicules porte-voitures.

Au sein d'une même paire, les deux vérins doivent avoir des mouvements synchronisés. Pour cela, il faut rajouter dans le circuit hydraulique des composants diviseur de débit 41 qui assurent le synchronisme des mouvements des deux vérins de chaque paire de vérins 1.

Comme représenté sur la figure 12, avec un circuit hydraulique selon l'art antérieur il est nécessaire d'utiliser un bloc de distribution 38 qui comprend un distributeur hydraulique 39 pour chacune des paires de vérins 1, ainsi qu'un composant diviseur de débit 41 pour chacune des paires de vérins 1.

Ce composant diviseur de débit 41, qui fonctionne à la fois en division et en reconstitution de débit, doit être placé sur l'un des tuyaux 40 partant de chaque distributeur hydraulique 39.

Au contraire, comme représenté sur la figure 11, avec un circuit hydraulique selon l'invention, un seul distributeur hydraulique 39 et un seul composant diviseur de débit 41 est nécessaire pour l'ensemble des paires de vérins 1.

Le composant diviseur de débit 41 est placé sur l'un des deux tuyaux 40 qui partent du distributeur hydraulique 39 et sur lesquels sont branchés chacun des vérins 1 du circuit. Ce composant diviseur de débit 41 divise ou recompose ainsi le débit pour chacune des paires de vérins simultanément. De ce fait, il permet d'assurer le synchronisme des mouvements de chacune des paires de vérins 1 dont le mouvement est commandé par l'opérateur.

A l'exception du mécanisme de synchronisation décrit ci-dessus, le principe général de fonctionnement des circuits hydrauliques du deuxième exemple est identique à celui des circuits hydrauliques du premier exemple, décrits précédemment en référence aux figures 9 et 10, en remplaçant chaque vérin par une paire de vérins. Il n'est donc pas utile de le décrire plus en détail.

Les circuits hydrauliques selon l'invention étant plus simples et comportant moins de composants que ceux de l'art antérieur, ils sont avantageusement moins coûteux et plus faciles à mettre en place. De même, leur maintenance est facilitée.

En outre, ils sont facilement modifiables pour y rajouter ou enlever un ou plusieurs vérins et rendent possible des évolutions ultérieures et intégrations de nouvelles fonctions, même dans un espace limité et encombré, comme c'est par exemple le cas dans un véhicule.

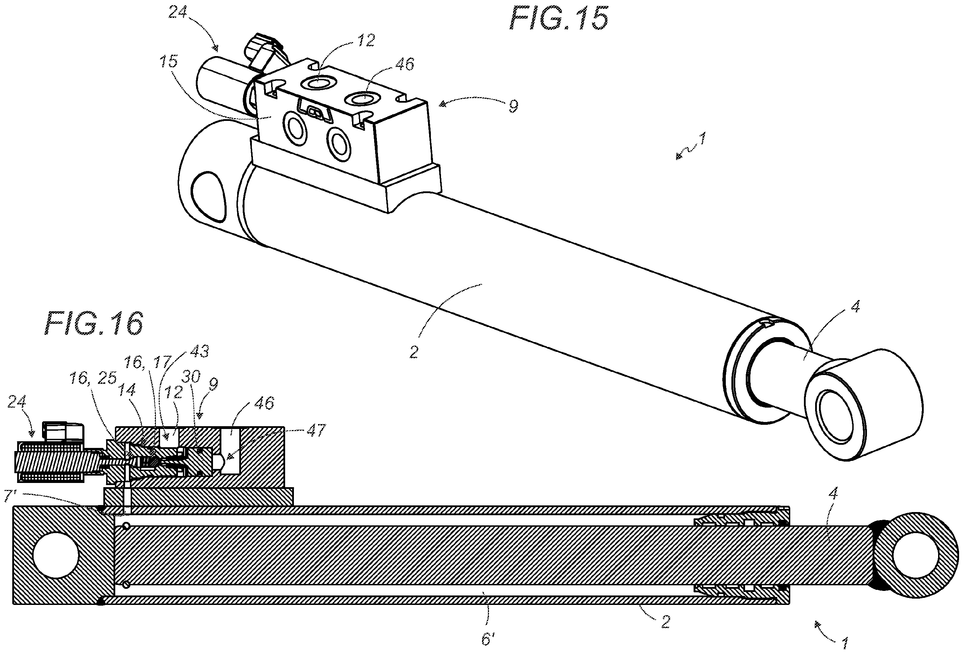

On a représenté sur les figures 15 à 20, un exemple de vérin 1 simple-effet de sécurité selon l'invention. Les moyens identiques ou équivalents porteront les mêmes références numériques que dans les modes de réalisation précédents.

Ce vérin 1 hydraulique comporte un fût 2 qui renferme une unique chambre 6' à l'intérieur de laquelle se déplace la tige 4 sous l'effet de la pression du fluide hydraulique. Un unique orifice 7' permet l'entrée ou la sortie du fluide hydraulique pour remplir ou vider la chambre 6'.

Ce vérin 1 est équipé d'un bloc de sécurité 9 selon l'invention, qui est connecté par sa sortie 10 à l'orifice 7' de la chambre 6' du vérin. Le bloc 9 comporte deux entrées 12 et 46 qui sont reliées au circuit hydraulique d'alimentation du vérin 1.

Le bloc de sécurité 9 ne comprend cette fois qu'un unique dispositif d'isolement 14 dans son corps 15, avec un unique passage hydraulique 43 qui relie l'entrée 12 à la sortie 10. Le bloc 9 comporte deux dispositifs d'obturation 16, différents et disposés en série dans le passage hydraulique 43 : un clapet anti-retour mécanique 17 à obturateur 18, par exemple à bille, passant dans le sens de l'entrée du fluide dans la chambre 6', et un préactionneur hydraulique 24, par exemple une électrovanne 25 préférentiellement à clapet comme représenté.

Ces deux dispositifs d'obturation fonctionnent comme précédemment et peuvent être disposés directement à la suite l'un de l'autre, ou à distance avec d'éventuels éléments interposés entre les deux, tant qu'ils restent en série.

En outre, même si sur l'exemple représenté, le préactionneur 24 est situé plus proche de la chambre concernée du vérin que le clapet anti-retour mécanique 17, une disposition inversée est également envisageable et avantageuse pour les raisons énoncées précédemment.

Le bloc de sécurité 9 représenté comporte en outre une pièce de commande 30 qui comporte un unique doigt latéral saillant 31 s'étendant en direction du clapet anti-retour mécanique 17 et qui peut provoquer l'ouverture de celui-ci lorsque la pièce de commande 30 se déplace dans sa direction.

Cette pièce de commande 30 est en communication hydraulique par sa face latérale 32 avec le passage hydraulique 43 qui débouche par l'entrée 12, et par sa face latérale 33 avec un passage de commande 47 qui débouche du bloc 9 par l'entrée 46 dédiée à cette fonction.

Ce bloc de sécurité 9 présente quatre états de fonctionnement différents.

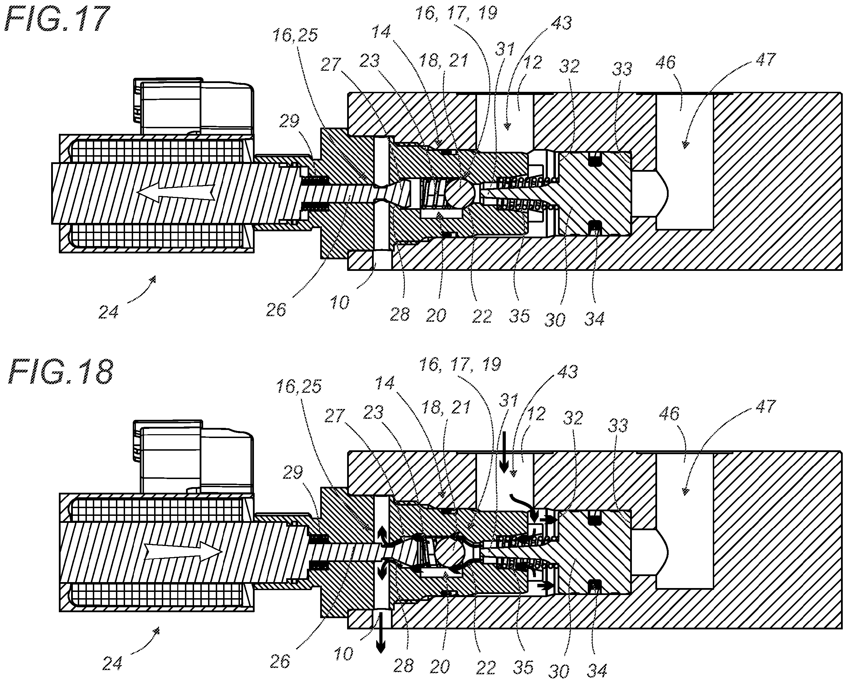

### Etat verrouillé (figure 17)

Cet état verrouillé correspond à la position sécuritaire d'équilibre, dans laquelle tous les vérins du circuit sont maintenus immobiles en l'absence de commande de la part de l'opérateur.

Dans cet état, l'alimentation électrique des électrovannes 25 est coupée et celles-ci sont maintenues fermées.

En outre, aucun fluide n'arrive par les entrées 12 et 46 du bloc de sécurité 9. Sous l'action du ressort 35, la pièce de commande 30 est maintenue éloignée du clapet anti-retour mécanique 17 qui est en position fermée.

Ainsi, la chambre 6' du vérin est verrouillée de manière étanche par deux dispositifs d'obturation 16 successifs en position fermée. La position de la tige 4 est bloquée par le verrouillage du débit hydraulique.

### Sortie de la tige du vérin (figure 18)

Pour obtenir la sortie de la tige 4 du vérin 1, l'opérateur commande l'ouverture de l'électrovanne 25 en l'alimentant électriquement.

De l'huile sous pression est envoyée par l'entrée 12 du bloc de sécurité 9 et pénètre dans le passage hydraulique 43 du dispositif. Le fluide vient appuyer contre la face latérale 32 de la pièce de commande 30 et la repousse loin du clapet anti-retour mécanique. Le fluide sous pression vient également pousser la bille 21 du clapet anti-retour mécanique 17 qui s'ouvre et devient passant.

Le fluide hydraulique poursuit son chemin à travers l'électrovanne 25, puis sort du bloc de sécurité 9 par sa sortie 10 et pénètre dans la chambre 6' du vérin 1 par son orifice 7'. L'huile sous pression vient pousser la tige 4 en direction de l'extérieur, provoquant ainsi sa sortie.

Lorsque la tige 4 du vérin a atteint la position souhaitée, l'opérateur stoppe la commande du distributeur hydraulique et plus aucun fluide n'arrive par l'entrée 12 du bloc de sécurité 9. La bille 21 du clapet anti-retour mécaniques 17 revient se centrer sur son siège 22.

L'alimentation électrique de l'électrovanne 25 est coupée, ce qui provoque automatiquement son passage en position fermée. Le bloc de sécurité 9 et le vérin 1 associé se retrouvent alors à l'état verrouillé sécuritaire décrit précédemment.

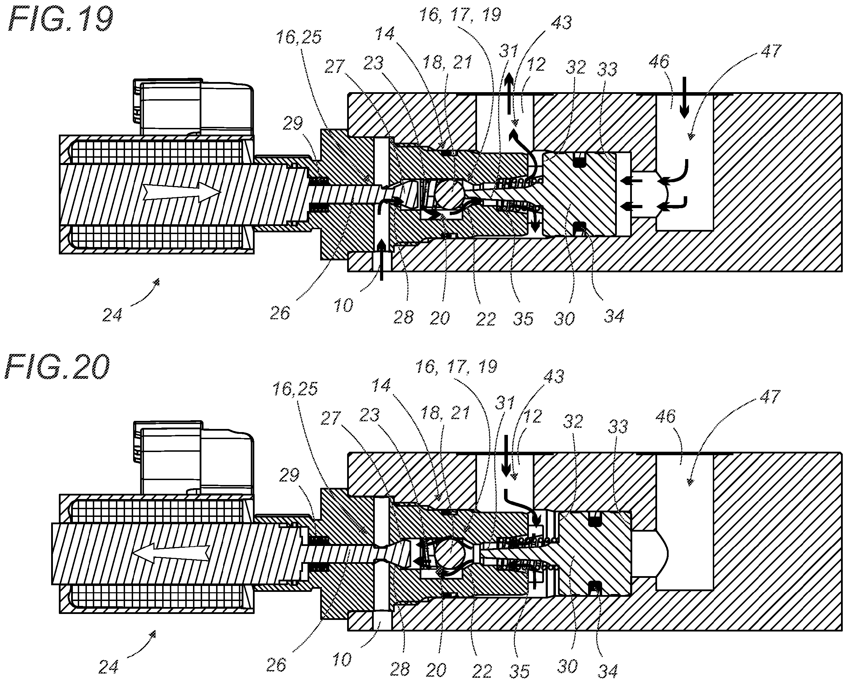

### Rentrée de la tige du vérin (figure 19)

Pour commander la rentrée de la tige 4, l'opérateur commande l'ouverture de l'électrovanne 25 en l'alimentant électriquement.

De l'huile sous pression est cette fois envoyée par l'entrée 46 du bloc de sécurité 9 et pénètre dans le passage de commande 47 du dispositif. Le fluide vient appuyer contre la face latérale 33 de la pièce de commande 30 et pousse cette dernière contre le clapet anti-retour mécanique 17. Par ce mouvement, le doigt latéral saillant 31 vient forcer en ouverture le clapet anti-retour mécanique 17 en poussant la bille 21 hors de son siège 22.

Le fluide hydraulique peut alors s'échapper hors de la chambre 6'en passant par l'orifice 7' et la sortie 10, puis traverser le bloc de sécurité 9 en empruntant le passage hydraulique 43 à travers l'électrovanne 25 et le clapet anti-retour mécanique 17, et quitter le bloc de sécurité 9 par son entrée 12 pour retourner au réservoir.

L'évacuation du fluide hors de la chambre 6' étant possible, la rentrée de la tige 4 du vérin s'effectue automatiquement sous l'effet du poids de la charge.

Lorsque la tige 4 du vérin a atteint la position souhaitée, l'opérateur stoppe l'arrivée du fluide par l'entrée 46 du bloc de sécurité 9. Le clapet anti-retour mécanique 17 n'est alors plus forcé en ouverture et se referme automatiquement.

L'alimentation électrique de l'électrovanne 25 est également coupée, ce qui provoque automatiquement son passage en position fermée. Le bloc de sécurité 9 et le vérin 1 associé se retrouvent alors à l'état verrouillé sécuritaire.

### Etat inactif du vérin (figure 20)

Le bloc de sécurité 9 se retrouve dans cet état lorsque l'opérateur commande le mouvement d'un autre vérin du circuit hydraulique.

Dans cet état, l'électrovanne 25 du bloc de sécurité 9 n'est pas alimentée électriquement et reste donc fermée. Elle s'oppose ainsi au passage du fluide hydraulique sous pression qui arrive par l'entrée 12 et provoque l'ouverture du clapet anti-retour mécanique 17 lorsque la sortie de la tige du vérin actif est commandée.

Elle s'oppose également au retour du fluide hydraulique vers le réservoir, lorsque le fluide hydraulique arrive par l'entrée 46 et que le clapet anti-retour mécanique 17 est forcé en ouverture par la pièce de commande 30, dans le cas où la rentrée de la tige du vérin actif est commandée. Même si le clapet anti-retour mécanique 17 est ouvert, l'électrovanne 25 reste fermée et verrouille le débit hydraulique, garantissant ainsi le maintien en position de la tige du vérin non choisi.

On a représenté sur la figure 21 un autre exemple de bloc de sécurité 9 selon l'invention, sans pièce de commande, destiné à équiper un vérin simple effet.

Comme précédemment, ce bloc de sécurité 9 comprend deux entrées 12 et 46 qui sont connectées au circuit hydraulique d'alimentation du vérin 1, et un unique dispositif d'isolement 14 avec un unique passage hydraulique 43 qui relie son entrée 12 à sa sortie 10, qui est destinée à être mise en communication avec l'orifice 7' de la chambre 6' du vérin.

Il comporte également deux dispositifs d'obturation 16, différents et disposés en série dans le passage hydraulique 43 : un clapet anti-retour mécanique 17 à obturateur 18, qui est cette fois un clapet anti-retour à pointeau conique 44, passant dans le sens de l'entrée du fluide dans la chambre 6', et un préactionneur hydraulique 24, par exemple une électrovanne 25 préférentiellement à clapet comme représenté.

Dans cette variante, pour permettre le vidage de la chambre du vérin, le clapet anti-retour mécanique 17 s'ouvre sous la poussée directe du fluide hydraulique pénétrant par l'entrée 46, et non plus sous la poussée indirecte de celui-ci via une pièce de commande. Lorsque du fluide hydraulique sous pression pénètre par l'entrée 46 dans le passage de commande 47, il vient directement pousser la face 48 en regard du pointeau 45 qui s'étend jusque dans le passage de commande 47 et provoque ainsi l'ouverture du clapet anti-retour mécanique 17.

Un joint annulaire 49 est préférentiellement prévu autour de la tige du pointeau 45 afin d'éviter toute traversée de fluide entre le passage hydraulique 43 et le passage de commande 47.

Le reste du fonctionnement de ce dispositif est identique à celui décrit précédemment pour la variante des figures 15 à 20.

Enfin, on a représenté sur la figure 22 un vérin 1 double-effet équipé d'un autre exemple de bloc de sécurité 9 selon l'invention. Celui comporte deux dispositifs d'isolement 14 et 14' séparés, équipant chacun l'une des chambres 5 ou 6 du vérin, et qui peuvent être protégés chacun dans un carter différent ou dans un carter commun.

Chacun de ces dispositifs d'isolement 14 ou 14' correspond à celui qui a été décrit pour un vérin simple-effet en référence aux figures 16 à 20. Les moyens étant identiques dans les deux dispositifs d'isolement 14 et 14', ils portent les mêmes références numériques mais avec un symbole ' pour le dispositif 14'.

Dans ce mode de réalisation, le jumelage pour le fonctionnement des deux dispositifs d'isolement 14 et 14' ne se fait pas au moyen d'une pièce de commande 30 unique, mais par une division des conduites d'alimentation 40 et 40'. En effet, la conduite 40, qui est destinée à alimenter en fluide hydraulique la chambre côté fond 5 du vérin, se divise en une portion de conduite 40a qui débouche dans l'entrée 12 du dispositif d'isolement 14 et une portion de conduite 40b qui débouche dans l'entrée 46' du dispositif d'isolement 14'. De la même façon, la conduite 40', qui est destinée à alimenter en fluide hydraulique la chambre côté tige 6 du vérin, se divise en une portion de conduite 40a' qui débouche dans l'entrée 12' du dispositif d'isolement 14' et une portion de conduite 40b' qui débouche dans l'entrée 46 du dispositif d'isolement 14.

Ainsi, lorsque les électrovannes 25 et 25' sont ouvertes, il est possible de faire sortir ou rentrer la tige 4 du vérin en envoyant du fluide sous pression dans la conduite 40 ou 40' respectivement.

Pour faire sortir la tige 4 par exemple, lorsque le fluide sous pression est envoyé dans la conduite 40, il pénètre, via la portion de conduite 40a, dans l'entrée 12 du dispositif 14 et pousse la bille 21 du clapet anti-retour mécanique 17 qui devient passant. Le fluide traverse alors l'électrovanne 25 et pénètre dans la chambre 6 du vérin 1 par son orifice 7 où il vient pousser la tige 4 pour provoquer sa sortie.

Parallèlement, du fluide sous pression pénètre également dans l'entrée 46' du dispositif 14', via la portion de conduite 40b. Ce fluide provoque le déplacement en direction du clapet anti-retour mécanique 17' de la pièce de commande 30' qui pousse la bille 21' de celui-ci au moyen de son doigt latéral saillant 31'. Le clapet anti-retour mécanique 17' devient alors passant et le fluide présent dans la chambre côté tige 6 peut s'échapper, au fur et à mesure de la sortie de la tige 4, via l'orifice 8, l'électrovanne 25', le clapet 17', l'entrée 12', la portion de conduite 40a' et la conduite 40'.

Pour faire rentrer la tige 4, le fluide sous pression est cette fois envoyé par la conduite 40'. Le fonctionnement est symétrique en inversant les deux dispositifs d'isolement 14 et 14'.

## Revendications

1. Bloc de sécurité (9) à double obturation en série, destiné à un vérin (1) hydraulique de levage capable de soulever, d'abaisser et de maintenir en l'air une charge, en vue de garantir, par le verrouillage du débit hydraulique, le maintien en position de la tige (4) du vérin (1) hydraulique, bloc de sécurité (9) prévu pour être monté dans le circuit hydraulique qui alimente le vérin (1) en fluide hydraulique, bloc de sécurité (9) comprenant :
- deux entrées (12, 13, 46, 12', 46') destinées à être connectées au circuit hydraulique et au moins une sortie (10, 11) destinée à être connectée à l'orifice (7, 8) d'une chambre (5, 6, 6') du vérin ;
- un passage hydraulique (43) entre une première de ces deux entrées (12, 13, 12') et l'au moins une sortie (10, 11), prévu pour que ladite chambre du vérin ne puisse être remplie et vidée qu'à travers ce passage hydraulique (43), et
- deux dispositifs d'obturation (16) placés en série dans le passage hydraulique (43) de façon que ladite chambre (5, 6, 6') du vérin puisse être verrouillée de manière étanche par deux dispositifs d'obturation (16) successifs, le premier de ces dispositifs d'obturation (16) étant un clapet anti-retour mécanique (17) à obturateur (18) qui est passant sous la poussée directe du fluide hydraulique pénétrant dans le passage hydraulique par la première de ces deux entrées (12, 13, 12') pour permettre le remplissage de ladite chambre du vérin et qui est également passant sous la poussée, directe ou via l'action d'une pièce de commande (30), du fluide hydraulique pénétrant par la deuxième de ces deux entrées (12, 13, 46, 46') pour permettre le vidage de ladite chambre du vérin,
bloc de sécurité (9) **caractérisé en ce que** les deux dispositifs d'obturation (16) sont de nature différente, et **en ce que** le deuxième de ces dispositifs d'obturation (16) est un préactionneur hydraulique (24) dont l'ouverture et la fermeture sont indépendantes de la présence ou de l'absence de fluide hydraulique au niveau des deux entrées (12, 13, 46, 12', 46') et dans le passage hydraulique (43).

2. Bloc de sécurité (9) selon la revendication 1, **caractérisé en ce que** le premier de ces dispositifs d'obturation (16) est un clapet anti-retour à bille (19) ou à pointeau conique (44).

3. Bloc de sécurité (9) selon la revendication 1 ou 2, **caractérisé en ce qu'**il comporte une pièce de commande (30) située à proximité du clapet anti-retour mécanique (17), cette pièce de commande se déplaçant en direction du clapet anti-retour mécanique (17) sous la poussée du fluide hydraulique pénétrant par la deuxième de ces deux entrées (12, 13, 46, 46') et venant pousser l'obturateur (18) pour provoquer l'ouverture du clapet anti-retour mécanique (17).

4. Bloc de sécurité (9) selon l'une quelconque des revendications 1 à 3, **caractérisé en ce que** le préactionneur hydraulique (24) est une vanne à commande électrique, pneumatique ou hydraulique, ou un clapet anti-retour piloté.

5. Bloc de sécurité (9) selon l'une quelconque des revendications 1 à 3, **caractérisé en ce que** le préactionneur hydraulique (24) est une électrovanne (25) ou est commandé au moyen d'une électrovanne (25).

6. Bloc de sécurité (9) selon l'une quelconque des revendications 1 à 5, **caractérisé en ce que** les deux dispositifs d'obturation (16) sont disposés directement à la suite l'un de l'autre.

7. Bloc de sécurité (9) selon l'une quelconque des revendications 1 à 6, destiné à un vérin hydraulique double-effet comprenant deux chambres (5, 6), **caractérisé en ce que** le bloc de sécurité (9) comporte :
- une deuxième sortie (10, 11), de sorte que les sorties (10, 11) soient destinées à être connectées pour la première à l'orifice (7) de la première des deux chambres (5) du vérin et pour la deuxième à l'orifice (8) de la deuxième des deux chambres (6) du vérin ;
- un deuxième passage hydraulique (43), de sorte que les deux passages hydrauliques (43) soient situés pour le premier entre la première de ces au moins deux entrées (12) et la première de ces deux sorties (10) et pour le deuxième entre la deuxième de ces au moins deux entrées (13, 12') et la deuxième des deux sorties (11), prévus pour que chacune des deux chambres (5, 6) du vérin ne puisse être remplie et vidée qu'à travers l'un de ces deux passages hydrauliques (43), et
- deux dispositifs d'obturation (16) supplémentaires, de nature différente, de sorte que deux dispositifs d'obturation (16) soient placés en série dans chacun de ces deux passages hydrauliques (43) de façon que chacune des deux chambres (5, 6) du vérin puisse être verrouillée de manière étanche par deux dispositifs d'obturation (16) successifs, le premier dispositif d'obturation des deux dispositifs d'obturation supplémentaires étant un clapet anti-retour mécanique (17) à obturateur (18) qui est passant sous la poussée directe du fluide hydraulique pénétrant dans le passage hydraulique concerné par l'entrée correspondante pour permettre le remplissage de la chambre concernée du vérin, et qui est également passant sous la poussée, directe ou via l'action d'une pièce de commande (30), du fluide hydraulique pénétrant par une autre de ces au moins deux entrées (12, 13, 46, 46') pour permettre le vidage de ladite chambre concernée du vérin, et le deuxième dispositif d'obturation des deux dispositifs d'obturation supplémentaires étant un préactionneur hydraulique (24) dont l'ouverture et la fermeture sont indépendantes de la présence ou de l'absence de fluide hydraulique au niveau de ces au moins deux entrées (12, 13, 46, 12', 46') et dans le passage hydraulique (43) concerné.

8. Bloc de sécurité (9) selon la revendication 7 **caractérisé en ce que**, dans chaque passage hydraulique (43), pour permettre le vidage de la chambre concernée du vérin, le clapet anti-retour mécanique (17) à obturateur (18) est prévu passant sous la poussée du fluide hydraulique pénétrant par l'entrée de l'autre passage hydraulique (43) ou par une autre entrée (43, 43') dédiée à cette fonction.

9. Bloc de sécurité (9) selon la revendication 7 ou 8 **caractérisé en ce qu'**il comporte un corps (15) unique dans lequel sont logés les deux passages hydrauliques (43).

10. Bloc de sécurité (9) selon l'une quelconque des revendications 7 à 9 **caractérisé en ce qu'**il comporte une pièce de commande (30) spécifique pour le clapet anti-retour mécanique (17) de chacun des deux passages hydrauliques (43).

11. Bloc de sécurité (9) selon l'une quelconque des revendications 7 à 9 **caractérisé en ce qu'**il comporte une pièce de commande (30) unique commune aux clapets anti-retour mécaniques (17) des deux passages hydrauliques (43) et susceptible de provoquer alternativement l'ouverture du clapet anti-retour mécanique (17) de chacun des deux passages hydrauliques (43).

12. Bloc de sécurité (9) selon l'une quelconque des revendications 6 à 11 **caractérisé en ce qu'**il comprend un préactionneur hydraulique (24) commun aux deux passages hydrauliques (43) servant de deuxième dispositif d'obturation (16) pour chacun des deux passages hydrauliques (43).

13. Vérin (1) hydraulique équipé d'un bloc de sécurité, **caractérisé en ce que** le bloc de sécurité est conforme à l'une quelconque des revendications 1 à 12.

14. Circuit hydraulique comprenant plusieurs vérins (1) hydrauliques, plusieurs blocs de sécurité (9), chaque vérin (1) étant équipé d'un bloc de sécurité (9) et comprenant une tige (4) et une ou deux chambres (5, 6) alimentées chacune à travers un passage hydraulique (43) dudit bloc de sécurité (9), un réservoir (36) de fluide hydraulique, un bloc de distribution (38), un ensemble de tuyaux (40) reliant le réservoir (36) aux vérins (1), via le bloc de distribution (38), afin de remplir et/ou de vider chacune des chambres (5, 6) des vérins (1), et un dispositif de pompage (37) permettant de faire circuler le fluide hydraulique dans les tuyaux (40), circuit hydraulique **caractérisé :**
**en ce que** le bloc de distribution (38) comprend un unique distributeur hydraulique (39) à trois positions, la première interrompant la circulation du fluide hydraulique, la deuxième mettant en communication le dispositif de pompage (37) et le réservoir (36) avec tous les blocs de sécurité (9) de tous les vérins (1) simultanément d'une façon capable de provoquer la sortie de la tige de tous les vérins (1), et la troisième mettant en communication le dispositif de pompage (37) et le réservoir (36) avec tous les blocs de sécurité (9) de tous les vérins (1) simultanément d'une façon capable de provoquer la rentrée de la tige de tous les vérins (1) ;
**en ce que** lesdits blocs de sécurité (9) sont des blocs de sécurité selon l'une quelconque des revendications 1 à 12 ; et
**en ce que** les préactionneurs hydrauliques (24) de chacun des blocs de sécurité (9) sont commandés de manière à pouvoir être ouverts ou fermés indépendamment des préactionneurs hydrauliques des autres blocs de sécurité (9).

15. Circuit hydraulique selon la revendication 14 **caractérisé en ce que** les préactionneurs hydrauliques (24) sont commandés à distance.

16. Circuit hydraulique selon la revendication 14 ou 15 **caractérisé en ce que** les vérins (1) sont organisés en plusieurs paires de deux vérins (1) fonctionnant de manière synchronisée et **en ce que** le circuit hydraulique comporte en outre un unique composant diviseur de débit (41), qui assure le synchronisme des mouvements de toutes les paires de vérins (1).

17. Circuit hydraulique selon l'une quelconque des revendications 14 à 16 **caractérisé en ce qu'**il n'y a que deux tuyaux (40) en sortie du bloc de distribution (38) allant en direction des blocs de sécurité (9), l'un dans lequel circule le fluide hydraulique permettant de provoquer la sortie de la tige de tous les vérins (1) et l'autre dans lequel circule le fluide hydraulique permettant de provoquer la rentrée de la tige de tous les vérins (1).

## Patentansprüche

1. Sicherheitsblock (9) mit serieller Doppelabsperrung für einen hydraulischen Hubzylinder (1), der eine Last anheben, absenken und in der Luft halten kann, um durch die Sperrung des Hydraulikflusses zu gewährleisten, dass die Kolbenstange (4) des Hydraulikzylinders (1) in Position gehalten wird, wobei der Sicherheitsblock (9) für den Einbau in den Hydraulikkreis vorgesehen ist, der den Zylinder (1) mit Hydraulikflüssigkeit versorgt, wobei der Sicherheitsblock (9) Folgendes umfasst:
- zwei Einlässe (12, 13, 46, 12', 46') zur Verbindung mit dem Hydraulikkreis und mindestens einen Auslass (10, 11) zur Verbindung mit der Öffnung (7, 8) einer Kammer (5, 6, 6') des Zylinders;
- einen hydraulischen Durchgang (43) zwischen einem ersten dieser beiden Einlässe (12, 13, 12') und mindestens einem Auslass (10, 11), der so vorgesehen ist, dass die Zylinderkammer nur über diesen hydraulischen Durchgang (43) gefüllt und entleert werden kann, und
- zwei Verschlussvorrichtungen (16), die in Reihe in dem hydraulischen Durchgang (43) angeordnet sind, so dass die Kammer (5, 6, 6') des Zylinders durch zwei aufeinanderfolgende Verschlussvorrichtungen (16) dicht verschlossen werden kann, wobei die erste dieser Verschlussvorrichtungen (16) ein mechanisches Rückschlagventil (17) mit Verschluss (18) ist, das unter dem direkten Druck der Hydraulikflüssigkeit, das durch den ersten der beiden Eingänge (12, 13, 12') in den hydraulischen Durchgang eindringt, durchlässig ist, um das Befüllen der besagten Zylinderkammer zu ermöglichen, und das auch unter der direkten oder über die Betätigung eines Steuerteiles (30) erfolgenden Schubkraft der Hydraulikflüssigkeit, die durch den zweiten der beiden Einlässe (12, 13, 46, 46') eintritt, durchlässig ist, um das Entleeren der besagten Zylinderkammer zu ermöglichen,
Sicherheitsblock (9), **dadurch gekennzeichnet, dass** die beiden Verschlussvorrichtungen (16) von unterschiedlicher Art sind, dass die zweite dieser Verschlussvorrichtungen (16) ein hydraulischer Vorbetätiger (24) ist, dessen Öffnen und Schließen unabhängig von der Anwesenheit oder Abwesenheit von Hydraulikflüssigkeit an den beiden Einlässen (12, 13, 46, 12', 46') und in dem hydraulischen Durchgang (43) ist.

2. Sicherheitsblock (9) nach Anspruch 1, **dadurch gekennzeichnet, dass** die erste dieser Verschlussvorrichtungen (16) ein Kugelrückschlagventil (19) oder ein Rückschlagventil mit konischer Nadel (44) ist.

3. Sicherheitsblock (9) nach Anspruch 1 oder 2, **dadurch gekennzeichnet, dass** er ein Steuerteil (30) umfasst, welches sich in der Nähe des mechanischen Rückschlagventils (17) befindet, wobei sich dieses Steuerteil unter dem Druck der Hydraulikflüssigkeit, die durch den zweiten dieser beiden Eingänge (12, 13, 46, 46') eindringt und auf den Verschluss (18) drückt, um das Öffnen des mechanischen Rückschlagventils (17) zu bewirken, in Richtung des mechanischen Rückschlagventils (17) verschiebt.

4. Sicherheitsblock (9) nach einem der Ansprüche 1 bis 3, **dadurch gekennzeichnet, dass** der hydraulische Vorbetätiger (24) ein elektrisch, pneumatisch oder hydraulisch betätigtes Ventil oder ein vorgesteuertes Rückschlagventil ist.

5. Sicherheitsblock (9) nach einem der Ansprüche 1 bis 3, **dadurch gekennzeichnet, dass** der hydraulische Vorbetätiger (24) ein Magnetventil (25) ist oder mittels eines Magnetventils (25) gesteuert wird.

6. Sicherheitsblock nach einem der Ansprüche 1 bis 5, **dadurch gekennzeichnet, dass** die beiden Verschlussvorrichtungen (16) direkt aufeinander folgend angeordnet sind.

7. Sicherheitsblock (9) nach einem der Ansprüche 1 bis 6 für einen doppeltwirkenden Hydraulikzylinder mit zwei Kammern (5, 6), **dadurch gekennzeichnet, dass** der Sicherheitsblock (9) folgendes umfasst:
- einen zweiten Ausgang (10, 11), so dass die Ausgänge (10, 11) dazu bestimmt sind, für den ersten mit der Öffnung (7) der ersten der beiden Kammern (5) des Zylinders und für den zweiten mit der Öffnung (8) der zweiten der beiden Kammern (6) des Zylinders verbunden zu werden;
- einen zweiten hydraulischen Durchgang (43), so dass die beiden hydraulischen Durchgänge (43) für den ersten zwischen dem ersten der mindestens zwei Einlässe (12) und dem ersten der beiden Auslässe (10) und für den zweiten zwischen dem zweiten der mindestens zwei Einlässe (13, 12') und dem zweiten der beiden Auslässe (11) liegen, die so vorgesehen sind, dass jede der beiden Kammern (5, 6) des Zylinders nur durch einen der beiden hydraulischen Durchgänge (43) gefüllt und entleert werden kann, und
- zwei zusätzliche Verschlussvorrichtungen (16) unterschiedlicher Art, so dass zwei Verschlussvorrichtungen (16) in jedem dieser beiden hydraulischen Durchgänge (43) in Reihe angeordnet sind, so dass jede der beiden Kammern (5, 6) des Zylinders durch zwei aufeinanderfolgende Verschlussvorrichtungen (16) dicht verriegelt werden kann, wobei die erste Verschlussvorrichtung der beiden zusätzlichen Verschlussvorrichtungen ein mechanisches Rückschlagventil (17) mit einem Verschluss (18) ist, das unter dem direkten Schub der Hydraulikflüssigkeit, die in den betreffenden hydraulischen Durchgang durch den entsprechenden Einlass eintritt, durchlässig ist, um das Füllen der betreffenden Kammer des Zylinders zu ermöglichen, und die auch unter dem direkten oder über die Wirkung eines Steuerteils (30) erfolgenden Druck der Hydraulikflüssigkeit, die durch einen anderen der mindestens zwei Einlässe (12, 13, 46, 46') eindringt, durchlässig ist, um das Entleeren der betreffenden Kammer des Zylinders zu ermöglichen, und die zweite Verschlussvorrichtung der beiden zusätzlichen Verschlussvorrichtungen ein Vorbetätiger (24) ist, dessen Öffnen und Schließen unabhängig von der Anwesenheit oder Abwesenheit von Hydraulikflüssigkeit an diesen mindestens zwei Einlässen (12, 13, 46, 12', 46') und in dem betreffenden hydraulischen Durchgang (43) ist.

8. Sicherheitsblock (9) nach Anspruch 7, **dadurch gekennzeichnet, dass** in jedem hydraulischen Durchtgang (43), um die Entleerung der betreffenden Kammer des Zylinders zu ermöglichen, das mechanische Rückschlagventil (17) mit Verschluss (18) vorgesehen ist, das unter dem Druck der Hydraulikflüssigkeit durchlässig ist, die durch den Einlass des anderen hydraulischen Durchgangs (43) oder durch einen anderen Einlass (43, 43'), der dieser Funktion gewidmet ist, eindringt.

9. Sicherheitsblock (9) nach Anspruch 7 oder 8, **dadurch gekennzeichnet, dass** er einen einzigen Körper (15) aufweist, in dem die beiden hydraulischen Durchgänge (43) angeordnet sind.

10. Sicherheitsblock (9) nach einem der Ansprüche 7 bis 9, **dadurch gekennzeichnet, dass** er ein spezielles Steuerteil (30) für das mechanische Rückschlagventil (17) jedes der beiden hydraulischen Durchgänge (43) aufweist.

11. Sicherheitsblock (9) nach einem der Ansprüche 7 bis 9, **dadurch gekennzeichnet, dass** er ein einziges Steuerteil (30) umfasst, das den mechanischen Rückschlagventilen (17) der beiden hydraulischen Durchgänge (43) gemeinsam ist und das geeignet ist, abwechselnd das Öffnen des mechanischen Rückschlagventils (17) jedes der beiden hydraulischen Durchgänge (43) zu bewirken.

12. Sicherheitsblock (9) nach einem der Ansprüche 6 bis 11, **dadurch gekennzeichnet, dass** er einen hydraulischen Vorbetätiger (24) umfasst, der den beiden hydraulischen Durchgängen (43) gemeinsam ist und als zweite Verschlussvorrichtung (16) für jeden der beiden hydraulischen Durchgänge (43) dient.

13. Hydraulischer Zylinder (1), der mit einem Sicherheitsblock ausgestattet ist, **dadurch gekennzeichnet, dass** der Sicherheitsblock einem der Ansprüche 1 bis 12 entspricht.

14. Hydraulikkreis mit mehreren Hydraulikzylindern (1), mehreren Sicherheitsblöcken (9), wobei jeder Zylinder (1) mit einem Sicherheitsblock (9) ausgestattet ist und eine Kolbenstange (4) und eine oder zwei Kammern (5, 6) umfasst, die jeweils über einen hydraulischen Durchgang (43) des Sicherheitsblocks (9) versorgt werden, einen Tank (36) für Hydraulikflüssigkeit, einen Verteilerblock (38), eine Einheit an Rohrleitungen (40), die den Tank (36) über den Verteilerblock (38) mit den Zylindern (1) verbinden, um jede der Kammern (5, 6) der Zylinder (1) zu befüllen und/oder zu entleeren, sowie eine Pumpvorrichtung (37), die es ermöglicht, die Hydraulikflüssigkeit in den Rohren (40) umzuwälzen, wobei der Hydraulikkreis **dadurch gekennzeichnet ist,**
**dass** der Verteilerblock (38) einen einzigen hydraulischen Verteiler (39) mit drei Positionen umfasst, wobei die erste den Umlauf der Hydraulikflüssigkeit unterbricht, die zweite die Pumpvorrichtung (37) und den Tank (36) mit allen Sicherheitsblöcken (9) aller Zylinder (1) gleichzeitig auf eine Weise verbindet, die das Ausfahren der Kolbenstange aller Zylinder (1) bewirken kann, und die dritte die Pumpvorrichtung (37) und den Tank (36) mit allen Sicherheitsblöcken (9) aller Zylinder (1) gleichzeitig in einer Weise verbindet, die das Einfahren der Kolbenstange aller Zylinder (1) bewirken kann; dass die Sicherheitsblöcke (9) Sicherheitsblöcke nach einem der Ansprüche 1 bis 12 sind; und
**dass** die hydraulischen Vorstellglieder (24) eines jeden der Sicherheitsblöcke (9) so gesteuert werden, dass sie unabhängig von den hydraulischen Vorstellgliedern der anderen Sicherheitsblöcke (9) geöffnet oder geschlossen werden können.

15. Hydraulikkreis nach Anspruch 14, **dadurch gekennzeichnet, dass** die hydraulischen Vorstellglieder (24) ferngesteuert sind.

16. Hydraulikkreis nach Anspruch 14 oder 15, **dadurch gekennzeichnet, dass** die Zylinder (1) in mehreren Paaren von jeweils zwei Zylindern (1) angeordnet sind, die synchron arbeiten, und dass der Hydraulikkreis außerdem einen einzigen Strömungsteiler (41) umfasst, der die Synchronität der Bewegungen aller Zylinderpaare von Zylindern (1) sicherstellt.

17. Hydraulikkreis nach einem der Ansprüche 14 bis 16, **dadurch gekennzeichnet, dass** es nur zwei Schläuche (40) am Auslass des Verteilerblocks (38) gibt, die in Richtung der Sicherheitsblöcke (9) verlaufen, wobei in dem einen die Hydraulikflüssigkeit umläuft, mit dem das Ausfahren der Kolbenstange aller Zylinder (1) bewirkt werden kann, und in dem anderen die Hydraulikflüssigkeit umläuft, mit dem das Einfahren der Kolbenstange aller Zylinder (1) bewirkt werden kann.

## Claims

1. Safety unit (9) with double shutoff in series, intended for a hydraulic lifting cylinder (1) capable of lifting, lowering and holding a load in the air, in order to guarantee, by locking the hydraulic flow, the holding in position of the rod (4) of the hydraulic cylinder (1), safety unit (9) intended to be mounted in the hydraulic circuit which supplies the cylinder (1) with hydraulic fluid, safety unit (9) comprising:
- two inlets (12, 13, 46, 12', 46') intended to be connected to the hydraulic circuit and at least one outlet (10, 11) intended to be connected to the orifice (7, 8) of a chamber (5, 6, 6') of the cylinder;
- an hydraulic passage (43) between a first of these two inlets (12, 13, 12') and the at least one outlet (10, 11), provided so that said cylinder chamber can only be filled and emptied through this hydraulic passage (43), and
- two shut-off devices (16) placed in series in the hydraulic passage (43) so that said chamber (5, 6, 6') of the cylinder can be locked in a sealed manner by two successive shut-off devices (16), the first of these shut-off devices (16) being a mechanical non-return valve (17) with a shutter (18) which is with a through state under the direct thrust of the hydraulic fluid entering the hydraulic passage through the first of these two inlets (12, 13, 12') to allow the filling of said chamber of the cylinder and which is also with a through state under the thrust, direct or via the action of a control part (30), of the hydraulic fluid entering through the second of these two inlets (12, 13, 46, 46') to allow the emptying of said chamber of the cylinder,
safety unit (9) **characterised in that** the two shut-off devices (16) are of different nature, and **in that** the second of these shut-off devices (16) is a hydraulic pre-actuator (24), the opening and closing of which are independent of the presence or absence of hydraulic fluid at the two inlets (12, 13, 46, 12', 46') and in the hydraulic passage (43).

2. Safety unit (9) according to claim 1, **characterised in that** the first of these shut-off devices (16) is a non-return valve (19) with a ball or conical needle (44).

3. Safety unit (9) according to claim 1 or 2, **characterised in that** it comprises a control part (30) located near the mechanical non-return valve (17), this control part moving in the direction of the mechanical non-return valve (17) under the thrust of the hydraulic fluid entering through the second of these two inlets (12, 13, 46, 46') and pushing the shutter (18) to cause the opening of the mechanical non-return valve (17).

4. Safety unit (9) according to any one of claims 1 to 3, **characterised in that** the hydraulic pre-actuator (24) is an electrically, pneumatically or hydraulically controlled valve, or a controlled non-return valve.

5. Safety unit (9) according to any one of claims 1 to 3, **characterised in that** the hydraulic pre-actuator (24) is a solenoid valve (25) or is controlled by means of a solenoid valve (25).

6. Safety unit (9) according to any one of claims 1 to 5, **characterised in that** the two shut-off devices (16) are arranged directly one after the other.

7. Safety unit (9) according to any one of claims 1 to 6, for a double-acting hydraulic cylinder comprising two chambers (5, 6), **characterised in that** the safety unit (9) is provided with:
- a second outlet (10, 11), such that the outlets (10, 11) are intended to be connected, for the first, to the orifice (7) of the first of the two chambers (5) of the cylinder and, for the second, to the orifice (8) of the second of the two chambers (6) of the cylinder;
- a second hydraulic passage (43), so that the two hydraulic passages (43) are located for the first between the first of these at least two inlets (12) and the first of these two outlets (10) and for the second between the second of these at least two inlets (13, 12') and the second of the two outlets (11), provided so that each of the two chambers (5, 6) of the cylinder can be filled and emptied only through one of these two hydraulic passages (43), and
- two additional shut-off devices (16), of different nature, so that two shut-off devices (16) are placed in series in each of these two hydraulic passages (43) so that each of the two chambers (5, 6) of the cylinder can be locked in a sealed manner by two successive shut-off devices (16), the first shut-off device of the two additional shut-off devices being a mechanical non-return valve (17) with a shutter (18) which is with a through state under the direct thrust of the hydraulic fluid entering the relevant hydraulic passage through the corresponding inlet to allow the filling of the relevant chamber of the cylinder, and which is also with a through state under the thrust, directly or via the action of a control part (30), of the hydraulic fluid entering through another of these at least two inlets (12, 13, 46, 46') to allow the emptying of said relevant chamber of the cylinder, and the second shut-off device of the two additional shut-off devices being a hydraulic pre-actuator (24) the opening and closing of which are independent of the presence or absence of hydraulic fluid at these at least two inlets (12, 13, 46, 12', 46') and in the relevant hydraulic passage (43).

8. Safety unit (9) according to Claim 7, **characterised in that**, in each hydraulic passage (43), to allow the relevant chamber of the cylinder to be emptied, the mechanical non-return valve (17) with a shutter (18) is provided with a through state under the pressure of the hydraulic fluid entering through the inlet of the other hydraulic passage (43) or through another inlet (43, 43') dedicated to this function.

9. Safety unit (9) according to claim 7 or 8, **characterised in that** it comprises a single body (15) in which the two hydraulic passages (43) are housed.

10. Safety unit (9) according to any one of claims 7 to 9, **characterised in that** it comprises a specific control part (30) for the mechanical non-return valve (17) of each of the two hydraulic passages (43).

11. Safety unit (9) according to any one of Claims 7 to 9, **characterised in that** it comprises a single control part (30) common to the mechanical non-return valves (17) of the two hydraulic passages (43) and capable of alternately causing the opening of the mechanical non-return valve (17) of each of the two hydraulic passages (43).

12. Safety unit (9) according to any one of claims 6 to 11, **characterised in that** it comprises a hydraulic pre-actuator (24) common to the two hydraulic passages (43) serving as a second shut-off device (16) for each of the two hydraulic passages (43).

13. Hydraulic cylinder (1) provided with a safety unit, **characterised in that** the safety unit is according to any one of claims 1 to 12.

14. Hydraulic circuit comprising several hydraulic cylinders (1), several safety units (9), each cylinder (1) being provided with a safety unit (9) and comprising a rod (4) and one or two chambers (5, 6) each supplied through a hydraulic passage (43) of said safety unit (9), a reservoir (36) of hydraulic fluid, a distribution unit (38), a set of pipes (40) connecting the reservoir (36) to the cylinders (1), via the distribution unit (38), in order to fill and/or empty each of the chambers (5, 6) of the cylinders (1), and a pumping device (37) for circulating the hydraulic fluid in the pipes (40), hydraulic circuit **characterised:**
**in that** the distribution unit (38) comprises a single hydraulic distributor (39) with three positions, the first interrupting the circulation of the hydraulic fluid, the second placing the pumping device (37) and the reservoir (36) in communication with all the safety units (9) of all the cylinders (1) simultaneously in a manner capable of causing the rod of all the cylinders (1) to come out, and the third placing the pumping device (37) and the reservoir (36) in communication with all the safety units (9) of all the cylinders (1) simultaneously in a manner capable of causing the rod of all the cylinders (1) to come in;
**in that** said security units (9) are security units according to any one of claims 1 to 12; and
**in that** the hydraulic pre-actuators (24) of each of the safety units (9) are controlled so as to be able to be opened or closed independently of the hydraulic pre-actuators of the other safety units (9).

15. Hydraulic circuit according to claim 14, **characterised in that** the hydraulic pre-actuators (24) are remotely controlled.

16. Hydraulic circuit according to claim 14 or 15, **characterised in that** the cylinders (1) are arranged into several pairs of two cylinders (1) operating in a synchronized manner and **in that** the hydraulic circuit further comprises a single flow divider component (41), which ensures the synchronism of the movements of all the pairs of cylinders (1).

17. Hydraulic circuit according to any one of claims 14 to 16, **characterised in that** there are only two pipes (40) at the outlet of the distribution unit (38) extending towards the safety units (9), one in which the hydraulic fluid circulates to cause the rod of all the cylinders (1) to come out and the other in which the hydraulic fluid circulates to cause the rod of all the cylinders (1) to come in.
